# EUROPÄISCHE PATENTANMELDUNG

(11) **EP 4 737 042 A2**
(43) Veröffentlichungstag der Anmeldung: **06.05.2026**
(21) Anmeldenummer: 25201650.6
(22) Anmeldetag: 11.09.2025
(51) Int. Cl.: B23K 9/095, B23K 9/12, B23K 9/173

(54) **METALL-SCHUTZGAS-LICHTBOGENFÜGEGERÄT FÜR DAS HAND-LICHTBOGENFÜGEN SOWIE VERFAHREN ZUM HAND-LICHTBOGENFÜGEN**

(30) Priorität: 16.10.2024 EP 24206950
(71) Anmelder: FRONIUS INTERNATIONAL GmbH, 4643 Pettenbach (AT)
(72) Erfinder: Waldhör, Andreas, 4643 Pettenbach (AT); Söllinger, Dominik, 4643 Pettenbach (AT)
(74) Vertreter: Bratovic, Nino Maria

(57) **Zusammenfassung**

Die Erfindung schafft ein Metall-Schutzgas-Lichtbogenfügegerät (100) für das Hand-Lichtbogenfügen (HLF) sowie Verfahren zum Hand-Lichtbogenfügen. Das Metall-Schutzgas-Lichtbogenfügegerät (100) umfasst zumindest:
- eine Stromquelle (150);
- eine Handhabungseinheit (112);
- eine Haupt-Drahtzuführeinrichtung (110) zum Fördern einer Drahtelektrode (10); und
- eine mit der Handhabungseinheit (112) verbundene Zusatz-Drahtzuführeinrichtung (120) zum Fördern eines Zusatzdrahts (20);
- eine Benutzerschnittstelle (160), welche dazu eingerichtet ist, ein End-Signal zu erzeugen;
- eine Steuereinrichtung (140), welche dazu eingerichtet ist, als Reaktion auf das End-Signal:
a) einen bei Empfang des End-Signals an der lichtbogentragenden abschmelzenden Drahtelektrode (10) anliegenden Lichtbogen (4) nach Empfang des End-Signals noch für mindestens eine Minimal-Zeitdauer (Tmin) aufrechtzuerhalten, bevor sein Erlöschen bewirkt oder zugelassen wird, und
b) eine Vorschubgeschwindigkeit (vZ) des abschmelzenden Zusatzdrahts (20) zumindest während der Minimal-Zeitdauer (Tmin) zumindest zeitweise zu ändern.

## Beschreibung

### Gebiet der Erfindung

Die Erfindung betrifft ein Metall-Schutzgas-Lichtbogenfügegerät für das Hand-Lichtbogenfügen sowie Verfahren zum Hand-Lichtbogenfügen, insbesondere zum händischen Metall-Schutzgas-Lichtbogenfügen, also etwa für ein Metall-Schutzgas-Handschweißen oder Metall-Schutzgas-Handlöten. Bei dem Verfahren kann es sich um ein Verfahren zum Beginnen eines Hand-Lichtbogenfügens, zum Beenden eines Hand-Lichtbogenfügens, oder um ein Verfahren einschließlich des Beginnens und des Beendens des Hand-Lichtbogenfügens handeln.

### Technischer Hintergrund

Viele Schweißaufgaben werden händisch durchgeführt, d.h., mittels Handschweißen. Die Qualität der Schweißnaht hängt dabei nicht nur von an dem Handschweißgerät eingestellten Parametern (z.B. Schweißparametern wie etwa Schweißstrom, Schweißspannung etc.) oder den verwendeten Materialien (Material des Werkstücks, Material eines etwaigen Zusatzdrahts, verwendetes Schutzgas) ab, sondern in hohem Maße auch von der Führung des Handschweißgeräts durch den Schweißer.

In einem typischen Umfeld, in welchem Handschweißen durchgeführt wird, sind die Möglichkeiten, einen Schweißer zur Verbesserung der Schweißnaht zu instruieren oder zu beeinflussen, häufig aufgrund von Lärm und anderen Ablenkungen begrenzt; darüber hinaus trägt der Schweißer für gewöhnlich eine Schweißmaske mit eingeschränktem Sichtfeld und ist visuell stark auf die Schweißnaht fixiert. Ähnliche Herausforderungen ergeben sich bei anderen Formen des Hand-Lichtbogenfügens, etwa beim Hand-Lichtbogenlöten.

Während des laufenden Schweißens (oder allgemein, während des Hand-Lichtbogenfügens) kann sich ein erfahrener Schweißer verhältnismäßig leicht auf die vorliegenden Gegebenheiten einstellen. Im Gegensatz dazu kann es beim Beginnen oder beim Beenden des Hand-Lichtbogenfügens auch für erfahrene Nutzer Schwierigkeiten geben, das Zusammenwirken der beteiligten Elemente (Lichtbogen, Zusatzdraht, Schmelzbad, Werkstück, ...) zu allen Zeiten richtig einzuschätzen, um ein zufriedenstellendes Füge-Ergebnis insbesondere auch am Beginn oder am Ende einer Fügenaht zu erhalten.

### Zusammenfassung der Erfindung

Nach all dem Vorangehenden ist es daher eine Aufgabe der vorliegenden Erfindung, ein verbessertes Metall-Schutzgas-Lichtbogenfügegerät für das Hand-Lichtbogenfügen, sowie verbesserte Verfahren zum händischen Metall-Schutzgas-Fügen (oder: Metall-Schutzgas-Handfügen, insbesondere Metall-Schutzgas-Hand-Lichtbogenschweißen oder Metall-Schutzgas-Hand-Lichtbogenlöten) bereitzustellen. Die Verbesserung betrifft dabei insbesondere einen Startprozess, insbesondere zu Beginn einer Schweißnaht, sowie einen Endprozess, insbesondere am Ende einer Schweißnaht.

Diese Aufgabe wird durch die Gegenstände der unabhängigen Patentansprüche gelöst.

Dementsprechend wird gemäß einem ersten Aspekt der Erfindung ein Metall-Schutzgas-Lichtbogenfügegerät für das Hand-Lichtbogenfügen bereitgestellt, umfassend:
- eine Stromquelle;
- eine Handhabungseinheit;
- eine Haupt-Drahtzuführeinrichtung zum Fördern einer lichtbogentragenden abschmelzenden Drahtelektrode; und
- eine mit der Handhabungseinheit verbundene Zusatz-Drahtzuführeinrichtung zum Fördern eines abschmelzenden Zusatzdrahts;
- eine Benutzerschnittstelle, welche dazu eingerichtet ist, als Reaktion auf eine Benutzereingabe zum Beenden des Hand-Lichtbogenfügens ein End-Signal zu erzeugen;
- eine Steuereinrichtung, welche dazu eingerichtet ist, als Reaktion auf das End-Signal:
   a) die Stromquelle und die Haupt-Drahtzuführeinrichtung zu steuern, einen bei Empfang des End-Signals an der lichtbogentragenden abschmelzenden Drahtelektrode anliegenden Lichtbogen nach Empfang des End-Signals noch für mindestens eine Minimal-Zeitdauer aufrechtzuerhalten, bevor sein Erlöschen bewirkt oder zugelassen wird, und
   b) die Zusatz-Drahtzuführeinrichtung zu steuern, dass der abschmelzende Zusatzdraht zumindest während der Minimal-Zeitdauer zumindest zeitweise seine Vorschubgeschwindigkeit ändert, wobei bevorzugt eine Verzögerung an den abschmelzenden Zusatzdraht angelegt wird (oder: der abschmelzende Zusatzdraht mit einer negativen Beschleunigung beaufschlagt wird).

Bei dem Metall-Schutzgas-Lichtbogenfügegerät kann es sich insbesondere um ein Metall-Schutzgas-Handschweißgerät oder ein Metall-Schutzgas-Handlötgerät handeln. Bei dem Metall-SchutzgasSchweißen kann es sich um Metall-Inertgas-Schweißen (MIG), um Metall-Aktivgas-Schweißen (MAG), um Metall-Inertgas-Löten, oder um Metall-Aktivgas-Löten handeln.

"Lichtbogentragende abschmelzende Drahtelektrode" bedeutet nicht, dass an dieser Drahtelektrode ständig ein Lichtbogen anliegt oder dass diese ständig abschmilzt, sondern dass das Metall-Schutzgas-Lichtbogenfügegerät derart ausgebildet und eingerichtet ist, dass an dieser ein elektrisches Potenzial zum Erzeugen eines Lichtbogens anlegbar ist, dass sie dazu ausgelegt ist, dass der Lichtbogen an ihr brennt, und sie dadurch abschmelzbar ist.

Die lichtbogentragende abschmelzende Drahtelektrode wird hierin teilweise auch kurz als "Drahtelektrode" bezeichnet, und der abschmelzende Zusatzdraht teilweise auch kurz als "Zusatzdraht". Es versteht sich jedoch, dass in manchen Varianten - wie teilweise auch explizit beschrieben wird - auch der Zusatzdraht als eine Elektrode fungieren kann, beispielweise für eine Kurzschlussbestimmung.

Die Benutzereingabe zum Beenden des Hand-Lichtbogenfügens wird häufig auch als "Austasten" bezeichnet, da der Benutzer etwa in einem so genannten 2-Takt-Betriebsmodus zum Beginn des Hand-Lichtbogenfügens einen Taster betätigt (Start-Signal), während des Hand-Lichtbogenfügens betätigt hält, und zum Beenden des Hand-Lichtbogenfügens diesen Taster wieder loslässt (End-Signal). Es ist aber auch ein so genannter 4-Takt-Betriebsmodus bekannt: Beim Betätigen des Tasters wird ein Signal gesendet, den Lichtbogen zu zünden, und beim Loslassen des Tasters beginnt der Schweißprozess mit dem tatsächlichen Schweißstrom (Hauptstrom). Mit erneutem Betätigen des Tasters wird ein End-Prozess eingeleitet (in welchem z.B. eine geringere Leistung ausgegeben wird), und mit dem erneuten Loslassen des Tasters wird der Wunsch des Benutzers angezeigt, das Hand-Lichtbogenfügen zu beenden. Somit wird bei diesem 4-Takt-Betriebsmodus das Start-Signal in Reaktion auf das erste Loslassen des Tasters, und das End-Signal in Reaktion auf das zweite Loslassen des Tasters erzeugt.

Es versteht sich, dass die Benutzereingabe auch in beliebiger anderer Art und Weise erfolgen kann, etwa durch Betätigen eines Startknopfs (Start-Signal) und späteres Betätigen eines End-Knopfs (End-Signal), über einen Wippschalter, und/oder dergleichen mehr. Ist das Metall-Schutzgas-Lichtbogenfügegerät ein MIG/MAG-Schweißgerät, kann das Start-Signal etwa als Reaktion auf ein Betätigen eines Brennertasters ("Eintasten") erzeugt werden, und das End-Signal als Reaktion auf ein Loslassen des Brennertasters ("Austasten").

Darunter, dass das Ändern "zumindest während der Minimal-Zeitdauer" stattfindet, soll verstanden werden, dass die Änderung in jedem Fall zumindest zeitweise während der Minimal-Zeitdauer stattfindet, optional aber auch darüber hinaus weitergehen kann oder auch nach der Minimal-Zeitdauer ein erneutes oder ein weiteres Ändern der Vorschubgeschwindigkeit auftreten kann.

Unter einem "zumindest zeitweisen Ändern" kann verstanden werden, dass das Ändern während der gesamten Minimal-Zeitdauer geändert wird, oder nur zeitweise, und dann gleichbleibt. Es kann auch mehrmals zwischen einem Ändern und einem Gleichbleiben der Vorschubgeschwindigkeit während der Minimal-Zeitdauer gewechselt werden.

Die Steuereinrichtung kann beispielsweise durch eine Recheneinrichtung implementiert werden, die etwa in einer Stromquelle des Metall-Schutzgas-Lichtbogenfügegeräts oder separat von dieser angeordnet sein kann. Sie kann auch als Software und/oder Hardware als Teil einer ohnehin in der Stromquelle angeordneten Recheneinrichtung implementiert sein, welche dort typischerweise für das präzise Steuern des gesamten Fügeprozesses und aller Parameter (Strom, Spannung, Drahtvorschübe, Gasdruck etc.) angeordnet und eingerichtet ist.

Eine solche Recheneinrichtung kann als eine beliebige Vorrichtung realisiert sein oder werden, welche zum Rechnen, und insbesondere zum Ausführen einer Software, einer App, oder eines Algorithmus in der Lage ist. Die Recheneinrichtung kann beispielsweise mindestens eine Prozessoreinheit aufweisen, z. B. eine Zentralprozessoreinheit (CPU) und/oder eine Graphikprozessoreinheit (GPU) und/oder eine Feld-programmierbare Logikschaltung (FPGA) und/oder eine anwendungsspezifische integrierte Schaltung (ASIC) und/oder eine Kombination davon. Die Recheneinrichtung kann außerdem einen Arbeitsspeicher aufweisen, welcher mit der mindestens einen Prozessoreinheit operativ gekoppelt ist, sowie einen nichtflüchtigen Speicher, welcher mit der mindestens einen Prozessoreinheit und dem Arbeitsspeicher operativ gekoppelt ist.

Einfach ausgedrückt ist die Steuereinrichtung dazu eingerichtet, als Reaktion auf das End-Signal:
a) einen bei Empfang des End-Signals an der lichtbogentragenden abschmelzenden Drahtelektrode (10) anliegenden Lichtbogen (4) nach Empfang des End-Signals noch für mindestens eine Minimal-Zeitdauer (Tmin) aufrechtzuerhalten, bevor sein Erlöschen bewirkt oder zugelassen wird, und
b) eine Vorschubgeschwindigkeit (vZ) des abschmelzenden Zusatzdrahts (20) zumindest während der Minimal-Zeitdauer (Tmin) zumindest zeitweise zu ändern.

Das Erlöschen des Lichtbogens wird typischerweise durch Ab- oder Wegschalten des an der lichtbogentragenden abschmelzenden Drahtelektrode anliegenden elektrischen Potenzials (oder, anders ausgedrückt, durch Abschalten des Stroms) bewirkt. Dies kann jedoch durch andere Maßnahmen ergänzt, oder ersetzt, werden, wie etwa durch das Zurückziehen der lichtbogentragenden abschmelzenden Drahtelektrode oder des Werkstücks bis der Lichtbogen abreißt.

Als Reaktion auf eine Benutzereingabe hin, mit welcher der Benutzer die Absicht signalisiert, das Hand-Lichtbogenfügen zu beenden, wird somit (vorzugsweise unmittelbar) das End-Signal erzeugt. Daraufhin wird der Lichtbogen noch mindestens für die Minimal-Zeitdauer aufrechterhalten, auch wenn in dieser Zeit andere Signale eingehen (die im Nachfolgenden noch näher erläutert werden), welche ein Abschalten (oder Erlöschenlassen) des Lichtbogens steuern oder fordern.

Das Aufrechterhalten des Lichtbogens bewirkt, dass weiterhin Wärme (Energie) erzeugt wird, und somit das Schmelzbad (und je nach Anwendung gegebenenfalls auch die lichtbogentragende abschmelzende Drahtelektrode und/oder der abschmelzende Zusatzdraht) noch nicht zu erstarren beginnt.

Im Stand der Technik hingegen bleibt die Vorschubgeschwindigkeit des Zusatzdrahts konstant und endet abrupt mit dem Ende des Lichtbogenfügens.

Durch das Verändern der Vorschubgeschwindigkeit des abschmelzenden Zusatzdrahts in diesem Zustand, also während der Lichtbogen noch brennt, wird somit erfindungsgemäß ermöglicht, dass der abschmelzende Zusatzdraht leicht aus dem noch formbaren Schmelzbad herausgezogen werden kann, statt - wie häufig im Stand der Technik - im schnell erstarrenden Schmelzbad festzukleben.

Die jeweilige Drahtzuführeinrichtung (d.h. Haupt-Drahtzuführeinrichtung bzw. Zusatz-Drahtzuführeinrichtung) kann - unter anderem - jeweils eine mechanische Drahtendenführung (z.B. gebildet durch ein Kontaktrohr) und eine zugehörige Drahtvorschubeinrichtung (z.B. einen Push-Motor oder einen Push-Pull-Motor) zum Fördern des Drahts (zumindest vorwärts, ggfs. vorwärts und rückwärts) umfassen.

Eine Drahtendenführung ist jeweils das Element, welches die letzte Führung des Drahtendes des jeweiligen Drahts (lichtbogentragende abschmelzende Drahtelektrode bzw. abschmelzender Zusatzdraht) vornimmt, bevor der jeweilige Draht auf das Werkstück tritt. Die Drahtendenführung kann auch als dasjenige Element definiert werden, welches eine jeweilige Förderrichtung endgültig vorgibt. Darüber hinaus kann die jeweilige Drahtzuführeinrichtung auch noch weitere Drahtführungen umfassen, welche zwischen der jeweiligen Drahtquelle (z.B. einer Drahtrolle oder einem Drahtfass) und der jeweiligen Drahtendenführung angeordnet sind.

Bei Metall-Schutzgas-Lichtbogenfügegeräten ist die Drahtendenführung der lichtbogentragenden abschmelzenden Drahtelektrode typischerweise als Kontaktrohr ausgebildet, mittels welchem die lichtbogentragende abschmelzende Drahtelektrode mit einem elektrischen Potenzial (z.B. Schweißplus) beaufschlagt wird. Somit ist die Drahtendenführung für gewöhnlich konzentrisch innerhalb einer Schutzgasdüse der Handhabungseinheit angeordnet. Die Drahtendenführung der Zusatz-Drahtzuführeinrichtung kann ebenso in die Handhabungseinheit integriert sein, oder seitlich, beispielsweise als ein Ausleger, an der Handhabungseinheit montiert sein. Der Ausleger kann beispielsweise seitlich an der Handhabungseinheit befestigt sein.

Die Handhabungseinheit wird bei Metall-Schutzgas-Lichtbogenschweißgeräten (oder: MIG/MAG-Schweißgeräten) typischerweise als "Schweißbrenner" bezeichnet. Diese Handhabungseinheit ist es, die ein Benutzer (z.B. ein Schweißer oder ein Löter) händisch führt. Da erfindungsgemäß die Drahtendenführung der Haupt-Drahtzuführeinrichtung in die Handhabungseinheit integriert ist, und die Drahtendenführung der Zusatz-Drahtzuführeinrichtung mit der Handhabungseinheit verbunden ist, werden durch das händische Führen der Handhabungseinheit somit beide Drahtendenführungen gleichzeitig und gemeinsam bewegt.

Das Abschmelzen des abschmelzenden Zusatzdrahts erfolgt durch Energie in Form von Wärme, welche auf den an der lichtbogentragenden abschmelzenden Drahtelektrode brennenden Lichtbogen zurückgeht. Beispielsweise kann der abschmelzende Zusatzdraht im Zentrum des Lichtbogens angeschmolzen werden, in dessen Randbereich angeschmolzen werden, außerhalb des Lichtbogens von dessen Wärmestrahlung angeschmolzen werden, oder auch am Werkstück durch das erwärmte Werkstück und/oder ein am Werkstück beim Hand-Lichtbogenfügen gebildetes Schmelzbad angeschmolzen werden. Jeweils alternativ oder nachfolgend kann der abschmelzende Zusatzdraht, durch jede dieser Varianten bzw. an jeder dieser Positionen auch abgeschmolzen werden.

Der abschmelzende Zusatzdraht kann dazu verwendet werden, eine Gegenkraft auf die Drahtendenführung der Zusatz-Drahtzuführeinrichtung zu bewirken, wodurch automatisch auch eine Kraft auf die mit dieser (insbesondere starr) verbundenen Handhabungseinheit ausgeübt wird. Diese Gegenkraft verspürt somit ein Nutzer des Metall-Schutzgas-Lichtbogenfügegeräts, welcher die Handhabungseinheit händisch führt. Auf diese Weise kann sich der Nutzer beim händischen Festlegen der Fügegeschwindigkeit - also der Geschwindigkeit, mit welcher die Handhabungseinheit entlang der zu erzeugenden Fügenaht bewegt wird - von dieser Kraft führen lassen.

Anders ausgedrückt wird einem Nutzer des Metall-Schutzgas-Lichtbogenfügegeräts (z.B. einem Schweißer) über die Gegenkraft ein intuitiv verständliches haptisches Feedback bereitgestellt, welches eine verbesserte Mensch-Maschine-Interaktion ermöglicht. Insbesondere in Montagehallen oder dergleichen, wo akustische Signale schwer vernehmbar sind, und beim Lichtbogenfügen, wo das Augenmerk des Nutzers auf der Fügenaht liegen sollte, ist das haptische Feedback für den Nutzer gut zusätzlich, nämlich in einem bislang wenig verwendeten Wahrnehmungskanal, vernehmbar.

Durch eine entsprechende Abstimmung der momentanen oder mittleren Vorschubgeschwindigkeiten der Haupt- und der Zusatz-Drahtzuführeinrichtung, insbesondere unter Berücksichtigung eines vorbestimmten oder verstellbaren Winkels zwischen einer Förderrichtung der Haupt-Drahtzuführeinrichtung und einer Förderrichtung der Zusatz-Drahtzuführeinrichtung, kann erreicht werden, dass der Nutzer durch das haptische Feedback geführt wird und die Handhabungseinheit mit einer optimalen oder vorgeschriebenen oder empfohlenen Fügegeschwindigkeit bewegt.

Hierzu wird der abschmelzende Zusatzdraht, auf das Werkstück derart hingeführt, und von der Handhabungseinheit des Metall-Schutzgas-Lichtbogenfügegeräts der Lichtbogen derart an der lichtbogentragenden abschmelzenden Drahtelektrode, erzeugt, dass der abschmelzende Zusatzdraht, während er angeschmolzen wird, noch so weit im feststofflichen Zustand mit einem gewissen, von der zweiten Vorschubgeschwindigkeit abhängigen Impuls (im physikalischen Sinn) auf das Werkstück trifft, dass er eine Kraft auf das Werkstück ausübt. Ein vollständiges Abschmelzen des Zusatzdrahts kann dann jeweils später erfolgen, wenn jeweils ein angeschmolzener, bereits auf dem Werkstück abgelegter (oder: auf das Werkstück aufgetragener) Abschnitt des Zusatzdrahts infolge der Bewegung der Handhabungseinheit in den Lichtbogen, oder in ein Zentrum des Lichtbogens, eintritt, während der nächste Abschnitt des Zusatzdrahts gleichzeitig angeschmolzen wird.

Die Drahtendenführung der Zusatz-Drahtzuführeinrichtung und die Handhabungseinrichtung sind bevorzugt starr miteinander verbunden, sodass die auf die Drahtendenführung der Zusatz-Drahtzuführeinrichtung einwirkende Gegenkraft im Wesentlichen, oder vollständig, und direkt an die Handhabungseinheit weitergegeben wird. Da der Nutzer die Handhabungseinheit händisch führt, gelangt das haptische Feedback somit in einfacher aber zuverlässiger Weise an den Schweißer. Wenn der Schweißer die Handhabungseinheit locker im festen Abstand zum Werkstück hält, kann die Handhabungseinheit durch die Kraftkomponente der Gegenkraft parallel zur Fügerichtung bewegt werden.

Die starre Verbindung kann fix sein, d.h., dass eine relative Stellung der Drahtendenführung der Zusatz-Drahtzuführeinrichtung zur Handhabungseinheit nicht veränderbar ist, oder sie kann verstellbar ausgeführt sein, wobei sie in der jeweils eingestellten Stellung dann wiederum festgestellt werden kann, etwa durch eine Rasteinrichtung, damit für das Schweißen wieder eine starre Verbindung vorliegt.

Eine Veränderung der Stellung zwischen den Drahtendenführungen kann auch dadurch vorgesehen sein, dass zwar die Drahtendenführung der Zusatz-Drahtzuführeinrichtung fix mit der Handhabungseinheit verbunden ist, jedoch die Stellung der Drahtendenführung der Haupt-Drahtzuführeinrichtung relativ zu der Handhabungseinheit verstellbar ist. Schließlich kann auch beides vorgesehen sein: sowohl eine Einstellung der relativen Stellung der Drahtendenführung der Zusatz-Drahtzuführeinrichtung zu der Handhabungseinheit, als auch der relativen Stellung der Drahtendenführung der Haupt-Drahtzuführeinrichtung zu der Handhabungseinheit.

Die jeweilige Drahtvorschubeinrichtung der Haupt-Drahtzuführeinrichtung bzw. der Zusatz-Drahtzuführeinrichtung kann jeweils separat von der zugehörigen Drahtendenführung angeordnet sein, und mit der jeweiligen Drahtendenführung unter anderem über eine Drahtseele und/oder ein Schlauchpaket verbunden sein. Die Drahtvorschubeinrichtung der Haupt-Drahtzuführeinrichtung beispielsweise ist häufig als externe Einheit ausgeführt. Denkbar wäre aber auch, dass die Drahtzuführeinrichtung in eine Stromquelle des Metall-Schutzgas-Lichtbogenfügegeräts (z.B. eine Schweißstromquelle) integriert ist.

Weitere Details zu einem solchen Metall-Schutzgas-Lichtbogenfügegerät sowie einem solchen Verfahren, bei denen durch den abschmelzenden Zusatzdraht eine Gegenkraft erzeugt wird, welche für den Nutzer als haptisches Feedback dient, finden sich insbesondere auch in der europäischen Patentanmeldung EP 24 20 6950, deren gesamter Inhalt hiermit durch Verweis aufgenommen wird.

Die eingangs genannten allgemeinen Schwierigkeiten, welche sich zu Beginn oder am Ende eines Fügevorgangs ergeben sind jedoch auch bei den dort beschriebenen Geräten und Verfahren präsent. Teilweise werden die Schwierigkeiten sogar dadurch verschärft, dass sich Nutzer weitgehend auf das äußerst intuitive haptische Feedback durch den abschmelzenden Zusatzdraht verlassen. Zu Beginn und am Ende des Fügevorgangs jedoch ist der abschmelzende Zusatzdraht häufig noch nicht, oder nicht mehr, im korrekten Kontakt mit dem Werkstück, sodass hier kein passendes haptisches Feedback gegeben werden kann. Hinzu kommen allgemeine Herausforderungen, wie etwa, dass beim Erstarren des Schmelzbades nach Erlöschen des Lichtbogens der abschmelzende Zusatzdraht in dem Schmelzbad anhaften kann.

Eine grundlegende Idee der vorliegenden Erfindung ist es daher, ein Metall-Schutzgas-Lichtbogenfügegerät und ein entsprechendes Verfahren bereitzustellen, welche das Festkleben des abschmelzenden Zusatzdrahts an dem Werkstück verhindern, oder zumindest die Wahrscheinlichkeit dafür deutlich verringern.

Gemäß einigen bevorzugten Ausführungsformen, Varianten oder Verfeinerungen von Ausführungsformen ist die Steuereinrichtung dazu eingerichtet, die Zusatz-Drahtzuführeinrichtung zu steuern, dass eine Vorschubgeschwindigkeit des abschmelzenden Zusatzdrahts während der Minimal-Zeitdauer (sich derart ändert, dass sie) reduziert wird, auf null sinkt, und/oder negativ wird.

Gemäß einigen bevorzugten Ausführungsformen, Varianten oder Verfeinerungen von Ausführungsformen beträgt die Minimal-Zeitdauer mindestens 10 Millisekunden, bevorzugt mindestens 50 Millisekunden. Es hat sich herausgestellt, dass kürzere Zeiträume als 10 Millisekunden nicht ausreichend sind, um das sichere Herausziehen des abschmelzenden Zusatzdrahts aus dem Schmelzbad sicherzustellen.

Bevorzugt beginnt das Ändern der Vorschubgeschwindigkeit, insbesondere das Anlegen einer Verzögerung (d.h. einer negativen Beschleunigung) an den abschmelzenden Zusatzdraht unmittelbar mit dem Beginn der Minimal-Zeitdauer, und vorteilhaft beginnen beide möglichst unmittelbar nach der Benutzereingabe zum Beenden des Hand-Lichtbogenfügens und/oder dem Erzeugen des End-Signals. Besonders bevorzugt wird die Verzögerung aufrechterhalten (insbesondere mit einem konstanten Verzögerungswert), bis die zunächst positive Vorschubgeschwindigkeit sich bis hin zu einer negativen Vorschubgeschwindigkeit geändert hat, also der abschmelzende Zusatzdraht rückwärts gefördert wird. Auf diese Weise wird der abschmelzende Zusatzdraht aktiv aus dem noch warmen Schmelzbad entfernt, um ein Ankleben zu verhindern.

Gemäß einigen bevorzugten Ausführungsformen, Varianten oder Verfeinerungen von Ausführungsformen ist die Steuereinrichtung dazu eingerichtet, das Aufrechterhalten des Lichtbogens nach Empfang des End-Signals spätestens dann zu beenden, wenn der Lichtbogen für eine Maximal-Zeitdauer aufrechterhalten wurde;
wobei die Maximal-Zeitdauer 500 Millisekunden oder weniger, bevorzugt 300 Millisekunden oder weniger, beträgt. Die Maximal-Zeitdauer ist dabei immer gleich oder länger eingestellt als die Minimal-Zeitdauer.

Es besteht nämlich ein gegenläufiges Interesse, einerseits nach der Benutzereingabe zum Beenden des Hand-Lichtbogenfügens den Lichtbogen möglichst schnell zu löschen (oder erlöschen zu lassen), da der Nutzer ab dieser Benutzereingabe davon ausgeht, dass der Lichtbogen erlischt, andererseits den Lichtbogen noch aufrechtzuerhalten, sodass der abschmelzende Zusatzdraht aus dem Schmelzbad entfernt wird oder werden kann. Dem ersteren Bestreben wird u. a. durch die Maximal-Zeitdauer Rechnung getragen, dem letzteren u. a. durch die Minimal-Zeitdauer.

Gemäß einigen bevorzugten Ausführungsformen, Varianten oder Verfeinerungen von Ausführungsformen umfasst das Metall-Schutzgas-Lichtbogenfügegerät ferner eine Zusatzdraht-Kurzschluss-Erfassungseinrichtung, welche dazu eingerichtet ist, zu erfassen, ob ein Kurzschluss des abschmelzenden Zusatzdrahts mit einem Werkstück vorliegt. Die Zusatzdraht-Kurzschluss-Erfassungseinrichtung kann hierzu beliebige im Stand der Technik bekannte Methoden verwenden, insbesondere ein Überwachen von Spannungen um Potenzialangleichungen oder Potenzialveränderungen festzustellen, ein Überwachen von Drahtvorschubkräften (da sich die Kraft erhöht, welche nötig ist, um eine Drahtelektrode vorzuschieben, wenn diese an ein Werkstück anstößt), oder dergleichen mehr. Das Überwachen von Drahtvorschubkräften erfolgt typischerweise über ein Überwachen eines Motorstroms an einem Drahtvorschubmotor, da eine größere nötige Kraft durch ein größeres Drehmoment von Förderrollen des (Draht-)Vorschubmotors erzeugt werden muss, und hierfür wiederum ein höherer Motorstrom benötigt wird.

Gemäß einigen bevorzugten Ausführungsformen, Varianten oder Verfeinerungen von Ausführungsformen ist die Zusatzdraht-Kurzschluss-Erfassungseinrichtung dazu eingerichtet, ein Eintreten und/oder Aufbrechen eines Kurzschlusses anhand einer Spannungsänderung an dem abschmelzenden Zusatzdraht zu erfassen. Das Werkstück liegt bei Lichtbogen-Fügeprozessen typischerweise auf einem durch die Stromquelle vorgegebenen elektrischen Potenzial (z.B. Schweißminus). Somit kann eine bestehende Spannung, oder Pegeldifferenz (oder eine Spannung oberhalb eines Schwellwerts) zwischen dem abschmelzenden Zusatzdraht und dem Werkstück auf einen fehlenden elektrischen Kontakt hinweisen, sowie ein Verschwinden der Spannung (oder deren Absinken unter den Schwellwert) auf einen entstandenen elektrischen Kontakt, insbesondere den Kurzschluss, hinweisen. Beispielsweise kann eine Pegeldifferenz von 2V einen Kurzschluss anzeigen bzw. so behandelt werden, und eine Pegeldifferenz von 20V einen fehlenden Kurzschluss anzeigen bzw. so behandelt werden, sodass ein zugehöriger Schwellwert beispielsweise auf 5V gelegt werden kann.

Gemäß einigen bevorzugten Ausführungsformen, Varianten oder Verfeinerungen von Ausführungsformen kann die Zusatzdraht-Kurzschluss-Erfassungseinrichtung dazu eingerichtet sein, den Zusatzdraht, insbesondere jedes Mal nachdem ein Aufbrechen eines Kurzschlusses erkannt wurde, erneut auf ein definiertes Potenzial zu bringen, sodass eine Veränderung dieses Potenzials, insbesondere um mehr als einen vordefinierten Toleranzwert, als Auftreten des Kurzschlusses angesehen wird, oder werden kann.

Alternativ oder zusätzlich kann die die Zusatzdraht-Kurzschluss-Erfassungseinrichtung auch dazu eingerichtet sein, das Eintreten des Kurzschlusses anhand einer Änderung einer benötigten oder ausgeübten Drahtvorschubkraft zum Fördern des abschmelzenden Zusatzdrahts durch die Zusatz-Drahtzuführeinrichtung zu erfassen.

Gemäß einigen bevorzugten Ausführungsformen, Varianten oder Verfeinerungen von Ausführungsformen ist die Steuereinrichtung dazu eingerichtet, das Aufrechterhalten des Lichtbogens nach Empfang des End-Signals und nach Ablauf der Minimal-Zeitdauer spätestens dann zu beenden, wenn durch die Zusatzdraht-Kurzschluss-Erfassungseinrichtung ein Aufbruch des Kurzschlusses des abschmelzenden Zusatzdrahts mit dem Werkstück erfasst wird. Dies zeigt nämlich an, dass der abschmelzende Zusatzdraht nicht mehr im elektrischen, und damit auch nicht mehr im direkten physischen, Kontakt mit dem Werkstück steht, und damit auch nicht mehr in dem Schmelzbad an dem Werkstück anhaften kann. Auf diese Weise wird die Sicherheit des Metall-Schutzgas-Lichtbogenfügegeräts erhöht, da der Lichtbogen nicht länger aufrechterhalten wird als nötig.

Gemäß einigen bevorzugten Ausführungsformen, Varianten oder Verfeinerungen von Ausführungsformen ist die Steuereinrichtung dazu eingerichtet, eine Drahtlänge des abschmelzenden Zusatzdrahts zu erfassen, um welche der abschmelzende Zusatzdraht rückwärts gefördert wurde, bis durch die Zusatzdraht-Kurzschluss-Erfassungseinrichtung (oder: Zusatzdraht-Kurzschluss-Messeinrichtung) der Aufbruch des Kurzschlusses erfasst wurde. Auf diese Weise ist ein Drahtspiel des abschmelzenden Zusatzdrahts erfassbar, welches nach dem Rückwärtsfördern vorliegt.

Die Steuereinrichtung kann ferner dazu eingerichtet sein, den abschmelzenden Zusatzdraht, nachdem er rückwärts gefördert wurde, unter Berücksichtigung der erfassten Drahtlänge vorwärts auf eine eingestellte Stick-Out-Länge zu fördern. Bei der Stick-Out-Länge handelt es sich um einen Abstand, um welchen die Drahtspitze des abschmelzenden Zusatzdrahts vor einer vordersten Spitze (oder: Drahtendenführung) der Zusatz-Drahtzuführeinrichtung hervorsteht.

Das Vorwärtsfördern erfolgt insbesondere mit einer Vorschubgeschwindigkeit von mindestens 5 Metern pro Minute, bevorzugt von mindestens 8 Metern pro Minute oder von mindestens 20 Metern pro Minute, wobei eine Vorschubgeschwindigkeit zwischen 8 Metern pro Minute und 15 Metern pro Minute, insbesondere von 10 Metern pro Minute, besonders bevorzugt ist.

Gemäß einigen bevorzugten Ausführungsformen, Varianten oder Verfeinerungen von Ausführungsformen ist die Benutzerschnittstelle außerdem dazu eingerichtet, als Reaktion auf eine Benutzereingabe zum Beginnen des Hand-Lichtbogenfügens ein Start-Signal zu erzeugen. Die Steuereinrichtung ist vorteilhaft außerdem dazu eingerichtet, als Reaktion auf das Start-Signal die Zusatz-Drahtzuführeinrichtung zu steuern, den abschmelzenden Zusatzdraht vorwärts zu fördern, bis die Zusatzdraht-Kurzschluss-Erfassungseinrichtung einen Kurzschluss zwischen dem abschmelzenden Zusatzdraht und dem Werkstück erfasst.

Die Steuereinrichtung kann außerdem dazu eingerichtet sein, die Stromquelle und die Haupt-Drahtzuführeinrichtung frühestens dann zu steuern, den Lichtbogen für das Hand-Lichtbogenfügen an der lichtbogentragenden abschmelzenden Drahtelektrode zu erzeugen, wenn der Kurzschluss zwischen dem abschmelzenden Zusatzdraht und dem Werkstück erfasst wurde. Der abschmelzende Zusatzdraht wird häufig dafür verwendet, um einen Spalt an einem Werkstück oder zwischen Werkstücken mit ausreichendem Material zu füllen.

Alternativ oder zusätzlich kann der abschmelzende Zusatzdraht auch dafür verwendet werden, dem Benutzer ein haptisches Feedback (insbesondere durch die beschriebene Gegenkraft) über eine vorgeschlagene oder vorgeschriebene Fügegeschwindigkeit zu geben. In beiden Fällen ist es vorteilhaft, wenn das Lichtbogenfügen erst beginnt, wenn der abschmelzende Zusatzdraht korrekt ausgerichtet ist, etwa: am Werkstück anliegt. Dies kann durch das Erfassen des Kurzschlusses angezeigt werden. Die korrekte Ausrichtung des abschmelzenden Zusatzdrahts kann auch beinhalten, dass der abschmelzende Zusatzdraht zuvor - etwa wie im Vorangehenden bereits erläutert wurde - mit einer vorbestimmten oder vom Benutzer eingestellten Stick-Out-Länge bereitgestellt wurde. Die Erfindung stellt somit auch ein Verfahren für ein Wiederaufnehmen des Hand-Lichtbogenfügens bereit.

Die Steuereinrichtung kann außerdem dazu eingerichtet sein, die Zusatz-Drahtzuführeinrichtung zu steuern, den abschmelzenden Zusatzdraht bis zum Erfassen des Kurzschlusses mit einer höheren Vorschubgeschwindigkeit (oder: Fördergeschwindigkeit) vorwärts zu fördern als bei dem nachfolgenden Hand-Lichtbogenfügen während des Brennens des Lichtbogens. Auf diese Weise kann schneller mit dem Lichtbogenfügen begonnen werden.

Gemäß einigen bevorzugten Ausführungsformen, Varianten oder Verfeinerungen von Ausführungsformen erfolgt das Vorwärts-Fördern, welches als Reaktion auf das Start-Signal erfolgt, mit einer Vorschubgeschwindigkeit zwischen 1,0 Metern pro Minute und 6 Metern pro Minute.

Gemäß einigen bevorzugten Ausführungsformen, Varianten oder Verfeinerungen von Ausführungsformen ist die Steuereinrichtung dazu eingerichtet, die Stromquelle zu steuern, den elektrischen Strom des Lichtbogens mit Empfang des End-Signals zu erhöhen, insbesondere um 25% oder mehr, oder um 50% oder mehr. Die Steuereinrichtung kann auch dazu eingerichtet sein, die Stromquelle zu steuern, die Stromzeitfläche zu verlängern, beispielsweise für 50 Millisekunden oder mehr, für 100 Millisekunden oder mehr, oder für 200 Millisekunden oder mehr.

Gemäß einigen bevorzugten Ausführungsformen, Varianten oder Verfeinerungen von Ausführungsformen ist eine Drahtendenführung der Zusatz-Drahtzuführeinrichtung derart angeordnet und eingerichtet, dass der abschmelzende Zusatzdraht, bei dem Hand-Lichtbogenfügen an einem zu fügenden Werkstück derart auftrifft, dass er, während er angeschmolzen wird, auf das Werkstück eine Kraft ausübt und somit eine Gegenkraft auf die Handhabungseinheit erzeugt. Wie im Vorangehenden bereits ausführlich erläutert wurde, kann hierdurch ein haptisches, physisches Feedback an den Benutzer erzeugt werden.

Gemäß einigen bevorzugten Ausführungsformen, Varianten oder Verfeinerungen von Ausführungsformen erfolgt das Fördern des abschmelzenden Zusatzdrahts bei dem Hand-Lichtbogenfügen mit einer Geschwindigkeit zwischen 0,1 Meter pro Minute und 3 Metern pro Minute, bevorzugt zwischen 0,3 Metern pro Minute und 1,5 Metern pro Minute. Insbesondere, wenn der Benutzer durch haptisches Feedback bezüglich der Fügegeschwindigkeit geleitet wird, kann dadurch eine vergleichsweise hohe kontinuierliche Fügegeschwindigkeit erzielt werden.

Die Erfindung stellt außerdem gemäß einem zweiten Aspekt ein Verfahren zum Beenden eines Hand-Lichtbogenfügens bereit, umfassend zumindest die Schritte:
- Hand-Lichtbogenfügen eines Werkstücks mittels eines Lichtbogens, welcher an einer lichtbogentragenden abschmelzenden Drahtelektrode anliegt, wobei ein abschmelzender Zusatzdraht zugeführt (oder: vorgeschoben) wird (insbesondere mit einer konstanten Vorschubgeschwindigkeit);
- automatisches Erfassen einer Benutzereingabe zum Beenden des Hand-Lichtbogenfügens, und daraufhin:
   - automatisches Aufrechterhalten des bei Erfassen der Benutzereingabe an der lichtbogentragenden abschmelzenden Drahtelektrode anliegenden Lichtbogens nach Erfassen der Benutzereingabe noch für mindestens eine Minimal-Zeitdauer; und
   - zumindest zeitweises automatisches Ändern einer Vorschubgeschwindigkeit des abschmelzenden Zusatzdrahts zumindest während der Minimal-Zeitdauer.

Gemäß einigen bevorzugten Ausführungsformen, Varianten oder Verfeinerungen von Ausführungsformen wird die Vorschubgeschwindigkeit des abschmelzenden Zusatzdrahts während der Minimal-Zeitdauer derart geändert, dass sie reduziert wird, auf null sinkt, und/oder negativ wird.

Die Erfindung stellt weiterhin, gemäß einem dritten Aspekt, ein Verfahren zum Beginnen eines Hand-Lichtbogenfügens eines Werkstücks bereit, umfassend zumindest die Schritte:
- automatisches Erfassen einer Benutzereingabe zum Beginnen des Hand-Lichtbogenfügens, und daraufhin:
   - automatisches Fördern eines abschmelzenden Zusatzdrahts vorwärts, bis ein Kurzschluss zwischen dem abschmelzenden Zusatzdraht und dem Werkstück erfasst wird;
   - automatisches Erzeugen eines Lichtbogens zum Hand-Lichtbogenfügen an einer lichtbogentragenden abschmelzenden Drahtelektrode frühestens dann, wenn der Kurzschluss zwischen dem abschmelzenden Zusatzdraht und dem Werkstück erfasst wurde; und
   - Hand-Lichtbogenfügen des Werkstücks mittels des erzeugten Lichtbogens, wobei der abschmelzende Zusatzdraht bis zum Erfassen des Kurzschlusses mit einer höheren Vorschubgeschwindigkeit vorwärts gefördert wird als bei dem nachfolgenden Hand-Lichtbogenfügen während des Brennens des Lichtbogens.

Es wird nochmals darauf hingewiesen, dass der Begriff "abschmelzender Zusatzdraht" nicht bedeutet, dass der Zusatzdraht zu jedem Zeitpunkt im Abschmelzen begriffen ist, und er ist insbesondere nicht im Abschmelzen begriffen, solange der Lichtbogen noch nicht erzeugt wurde. Vielmehr deutet der Begriff an, dass der Zusatzdraht dazu vorgesehen und ausgewählt ist, während des Hand-Lichtbogenfügens abgeschmolzen zu werden. Dies kann dazu dienen, Zusatzmaterial für die Fügenaht bereitzustellen und/oder um den Zusatzdraht zu verbrauchen, damit er stetig weiter gefördert werden kann, um ein ständiges haptisches Feedback an den User bereitzustellen.

Gemäß einigen bevorzugten Ausführungsformen, Varianten oder Verfeinerungen von Ausführungsformen des zweiten oder des dritten Aspekts der Erfindung umfasst das Hand-Lichtbogenfügen ein händisches Führen einer Handhabungseinheit in einer Fügerichtung entlang einer zu erzeugenden Fügenaht an dem Werkstück umfasst, wobei der abschmelzende Zusatzdraht derart an das Werkstück herangeführt wird, dass eine Kraftkomponente einer von dem abschmelzenden Zusatzdraht auf das Werkstück ausgeübten Kraft eine Gegenkraft auf die Handhabungseinheit in die Fügerichtung bewirkt.

Weitere bevorzugte Ausführungsformen, Varianten und Weiterbildungen von Ausführungsformen ergeben sich aus den Unteransprüchen sowie aus der Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Es zeigen:
- Fig. 1: eine schematische Darstellung eines Metall-Schutzgas-Lichtbogenfügegeräts für das Hand-Lichtbogenfügen gemäß einer Ausführungsform der vorliegenden Erfindung; und
- Fig. 2: eine schematische Darstellung einer möglichen Variante des Metall-Schutzgas-Lichtbogenfügegeräts aus Fig. 1;
- Fig. 3 bis Fig. 6: verschiedene Graphen, welche Varianten und Optionen für das Metall-Schutzgas-Lichtbogenfügegerät aus Fig. 1 oder Fig. 2 erläutern;
- Fig. 7: ein schematisches Flussdiagramm zur Erläuterung eines Verfahrens gemäß einer Ausführungsform des zweiten Aspekts der vorliegenden Erfindung; und
- Fig. 8: ein schematisches Flussdiagramm zur Erläuterung eines Verfahrens gemäß einer Ausführungsform des zweiten Aspekts der vorliegenden Erfindung.

In sämtlichen Figuren sind gleiche bzw. funktionsgleiche Elemente und Vorrichtungen - sofern nichts anderes angegeben ist - mit denselben Bezugszeichen versehen worden. Die Darstellungen von Vorrichtungen und Zeitachsen sind nicht zwangsläufig maßstabsgetreu, sondern dienen vor allem der Veranschaulichung, wobei einzelne Figuren oder Teile auch maßstabsgetreu dargestellt sein können.

Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

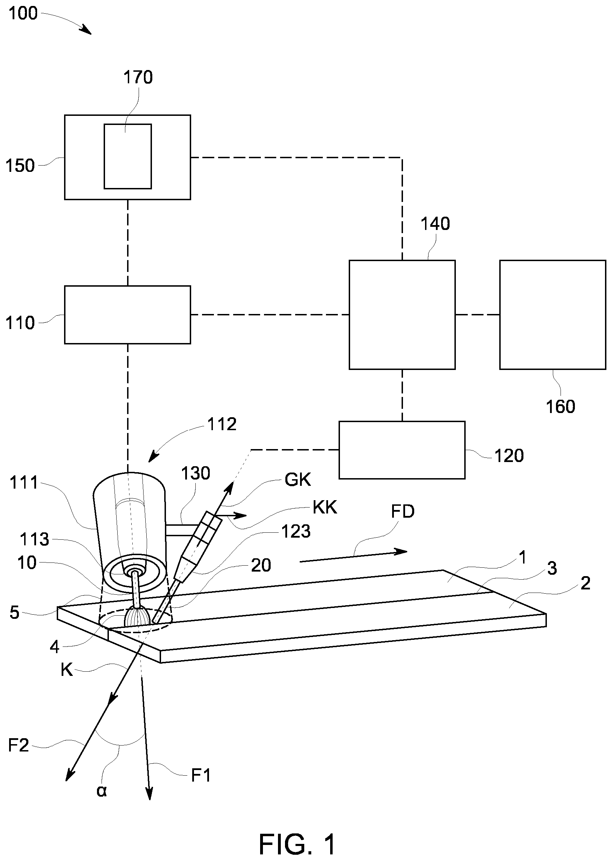

Fig. 1 zeigt eine schematische Darstellung eines Metall-Schutzgas-Lichtbogenfügegeräts 100 für das Hand-Lichtbogenfügen gemäß einer Ausführungsform der vorliegenden Erfindung.

Als ein konkretes Beispiel wird hier und im Folgenden ein Metall-Schutzgas-Schweißgerät zur Erklärung der Funktionen und möglicher Varianten der Erfindung verwendet. Es versteht sich jedoch, dass alles Beschriebene und Implizierte ebenso auch auf andere Metall-Schutzgas-Lichtbogenfügegeräte anwendbar ist, beispielsweise auf Metall-Schutzgas-Lichtbogen-Lötgeräte. Dementsprechend können alle auf Schweißen bezogenen Begriffe hierin (z.B.: Schweißrichtung, Schweißprogramm, Schweißbrenner, Schweißer, etc.) auch entsprechend auf Lichtbogen-Lötgeräte/Lichtbogen-Lötverfahren oder andere Lichtbogen-Fügegeräte/Lichtbogen-Fügeverfahren gelesen werden.

Das beispielhaft beschriebene Metall-Schutzgas-Lichtbogenfügegerät 100, ist insbesondere zum Metall-Schutzgas-Handschweißen eingerichtet. In Fig. 1 sind nur die für die vorliegende Erfindung relevantesten Elemente des Metall-Schutzgas-Lichtbogenfügegeräts 100, dargestellt; es versteht sich, dass dieses weitere für Metall-Schutzgas-Fügegerätgeräte 100 (insbesondere Metall-Schutzgas-Schweißgeräte) typische Elemente umfassen kann, wie etwa ein Schlauchpaket, eine oder mehrere Drahtspindeln, einen Schutzgasspeicher, und/oder dergleichen mehr.

Im Folgenden werden außerdem zunächst beispielhaft verschiedene strukturelle und funktionale Elemente des Metall-Schutzgas-Lichtbogenfügegeräts 100 beschrieben, wobei dies nicht bedeutet, dass sämtliche beschriebene Elemente notwendig sind. Vielmehr wird durch eine abgerundete Beschreibung mit zahlreichen optionalen Elementen ein umfassenderes Bild dargestellt, in welchen Zusammenhängen und Situationen die Erfindung vorteilhaft sein kann.

Da sich die vorliegende Erfindung vornehmlich mit dem Ende und dem Beginn eines Hand-Lichtbogenfügens beschäftigt, sind sämtliche strukturellen oder funktionalen Merkmale des Metall-Schutzgas-Lichtbogenfügegeräts 100, welche sich mit dem Hand-Lichtbogenfügen in einem Regelbetrieb beschäftigen, als vorteilhaft aber optional anzusehen. Unter dem Regelbetrieb wird der Betrieb verstanden, in welchem der Benutzer eine Fügeaufgabe durchführt, also nachdem ein Lichtbogen 4 gezündet (und ggfs. stabilisiert) wurde und bevor der Benutzer eine Benutzereingabe getätigt hat, welche anzeigt, dass das Hand-Lichtbogenfügen beendet werden soll.

Das erfindungsgemäße Metall-Schutzgas-Lichtbogenfügegerät 100 umfasst eine Haupt-Drahtzuführeinrichtung 110 zum Fördern einer lichtbogentragenden abschmelzenden Drahtelektrode 10, entlang einer ersten Förderrichtung F1. Die Haupt-Drahtzuführeinrichtung 110 ist in Fig. 1 nur schematisch dargestellt. Ein Teil der Haupt-Drahtzuführeinrichtung, nämlich deren Drahtendenführung 113, ist als das Kontaktrohr eines (nur teilweise dargestellten) Schweißbrenners 112 ausgebildet und in diesen integriert. Dabei ist die Drahtendenführung 113 der Haupt-Drahtzuführeinrichtung 110 vorteilhaft starr, insbesondere fix, in dem Schweißbrenner 112 angeordnet.

Der Schweißbrenner 112 wird von einem Schweißer händisch geführt und stellt somit in dem gezeigten Beispiel die Handhabungseinheit des Metall-Schutzgas-Lichtbogenfügegeräts 100 dar.

Der Schweißbrenner 112 ist dazu eingerichtet, an der lichtbogentragenden abschmelzenden Drahtelektrode 10 einen Lichtbogen 4 zu erzeugen, um ein Fügeprogramm (hier: Schweißprogramm) durchzuführen. Die hierfür verwendete Leistungselektronik ist typischerweise ganz oder teilweise in einer Stromquelle 150 (hier: Schweißstromquelle) des Metall-Schutzgas-Lichtbogenfügegeräts 100, angeordnet. Auch eine Drahtvorschubeinrichtung der Haupt-Drahtzuführeinrichtung 110 (bei diesem Ausführungsbeispiel als externe Einheit ausgeführt) kann an oder in der Stromquelle 150 des Metall-Schutzgas-Schweißgeräts 100 angeordnet sein.

In Fig. 1 ist das Werkstück 1, 2 dargestellt als zwei Werkstückteile 1, 2, welche in einem Stumpfstoß 3 zu verschweißen sind; es versteht sich, dass auch eine Vielzahl anderer Schweißaufgaben mit dem erfindungsgemäßen Metall-Schutzgas-Lichtbogenfügegerät 100, durchführbar sind, beispielsweise Stumpfstöße mit und ohne Fase, Kehlnähte, und dergleichen mehr.

Das Metall-Schutzgas-Lichtbogenfügegerät 100 umfasst außerdem eine Gasführung (nicht dargestellt) mit einer Schutzgasdüse 111, welche typischerweise ebenfalls an dem Schweißbrenner 112 angeordnet ist, und welche dazu eingerichtet ist, ein Schutzgas 5 auszuströmen, welches die chemischen Vorgänge während des Schweißens gegenüber äußeren Einwirkungen, insbesondere von Sauerstoff aus der Umgebung, schützt. Das Metall-Schutzgas-Lichtbogenfügegerät 100, kann ein Metall-Inertgas-Schweißgerät, also ein MIG-Schweißgerät, oder ein Metall-Aktivgas-Schweißgerät, also ein MAG-Schweißgerät, sein.

Das Metall-Schutzgas-Lichtbogenfügegerät 100, umfasst außerdem eine Zusatz-Drahtzuführeinrichtung 120 sowie eine mit dem Schweißbrenner 112 verbundene Drahtendenführung 123 der Zusatz-Drahtzuführeinrichtung 120 zum Fördern eines abschmelzenden Zusatzdrahts 20 entlang einer von der ersten Förderrichtung F1 verschiedenen zweiten Förderrichtung F2. Auch die Zusatz-Drahtzuführeinrichtung 120 ist in Fig. 1 nur schematisch dargestellt. Obwohl die jeweiligen Drahtendenführungen 113, 123 aus Gründen der Übersichtlichkeit separat dargestellt sind, versteht es sich, dass diese jeweils Teil der Haupt-Drahtzuführeinrichtung 110 bzw. der Zusatz-Drahtzuführeinrichtung 120 sind.

Die Drahtendenführung 123 der Zusatz-Drahtzuführeinrichtung 120 ist über eine Halterung 130 mit dem Schweißbrenner 112 verbunden. Die Halterung 130 kann entweder fix ausgeführt sein, sodass die erste Förderrichtung F1 und die zweite Förderrichtung F2 in einem festen Winkel α zueinander stehen, oder verstellbar ausgeführt sein, sodass der Winkel α einstellbar ist. In beiden Fällen ist die Verbindung jedoch, ggfs. nach Einstellung und Feststellung (d.h. temporärer, wieder lösbarer Fixierung), starr, sodass ein Kraftübertrag von der Zusatz-Drahtzuführeinrichtung 120 auf den Schweißbrenner 112 im Wesentlichen vollständig erfolgt.

Der starre Winkel α kann zwischen 10° und 80° (also 10°≤α≤80°), bevorzugt zwischen 25° und 70° (also 25°≤α≤70°), besonders bevorzugt zwischen 30 und 60° (also 30°≤α≤60°) betragen. Bei der verstellbaren Halterung 130 kann der Winkel α innerhalb eines dieser Bereiche einstellbar sein.

Der Schweißbrenner 112 ist insbesondere dazu eingerichtet, so geführt zu werden, dass der abschmelzende Zusatzdraht 20 der lichtbogentragenden abschmelzenden Drahtelektrode 10 sowie dem Schmelzbad in Fügerichtung FD immer vorangeht.

Die Zusatz-Drahtzuführeinrichtung 120, insbesondere deren Drahtendenführung 123, ist vorteilhaft derart angeordnet und eingerichtet, dass der abschmelzende Zusatzdraht 20, bei dem Handschweißen in solcher Weise auf das zu schweißende Werkstück 1, 2 auftrifft, dass der abschmelzende Zusatzdraht 20, während er von dem Lichtbogen 4 der lichtbogentragenden abschmelzenden Drahtelektrode 10 angeschmolzen wird, auf das Werkstück 1, 2 eine Kraft K ausübt und somit (nach dem 3. Newton'schen Gesetz) eine Gegenkraft GK auf die Drahtendenführung 123 der Zusatz-Drahtzuführeinrichtung 120 erzeugt.

Die ausgeübte Kraft K wirkt im Wesentlichen, oder vollständig, entlang der zweiten Förderrichtung F2, und die entsprechende Gegenkraft GK somit entgegen der zweiten Förderrichtung F2. Wie in Fig. 1 gezeigt, ist die Anordnung weiterhin derart, dass die Gegenkraft GK eine Kraftkomponente KK entlang der Fügerichtung FD aufweist. Über die Halterung 130 liegt diese Kraftkomponente KK auch an der Handhabungseinheit, d.h. dem Schweißbrenner 112, an. Diese Kraftkomponente KK stellt für den Nutzer des Metall-Schutzgas-Lichtbogenfügegeräts 100, ein haptisches Feedback dar, insbesondere um daran die dem Nutzer vorgegebene Fügegeschwindigkeit entlang der Fügerichtung FD einstellen zu können. Bei dem konkreten Beispiel von Fig. 1 wird somit einem Schweißer ein haptisches Feedback über eine einzuhaltende Schweißgeschwindigkeit entlang der Schweißrichtung gegeben.

Das Metall-Schutzgas-Lichtbogenfügegerät 100 weist, wie bereits erwähnt, eine Steuereinrichtung 140 auf, mittels welcher sowohl die Haupt-Drahtzuführeinrichtung 110 als auch die Zusatz-Drahtzuführeinrichtung 120, insbesondere miteinander koordiniert und bevorzugt synchronisiert, steuerbar sind. Die Steuereinrichtung 140 kann beispielsweise in der Stromquelle 150 angeordnet oder integriert sein, aber auch davon separat ausgebildet sein.

Die Stromquelle 150 des Metall-Schutzgas-Lichtbogenfügegeräts 100 ist dazu eingerichtet und ausgelegt, Energie für das Erzeugen des Lichtbogens 4 an der Lichtbogentragenden abschmelzenden Drahtelektrode 10 bereitzustellen. Das Metall-Schutzgas-Lichtbogenfügegerät 100 weist außerdem eine Benutzerschnittstelle 160 auf, welche dazu eingerichtet ist, als Reaktion auf eine Benutzereingabe zum Beenden des Hand-Lichtbogenfügens ein End-Signal zu erzeugen.

Die Benutzerschnittstelle 160 kann beispielsweise in Hardware und/oder Software ausgebildet sein. Beispielsweise kann die Benutzerschnittstelle 160 einen Touch Screen und/oder manuelle Bedienelemente aufweisen, welche zum Beispiel in die Stromquelle 150 integriert sein können, aber auch separat davon angeordnet sein können. Die Benutzerschnittstelle 160 kann auch drahtlos ausgebildet sein und beispielsweise die Kommunikation mit einem mobilen Endgerät ermöglichen, auf welchem eine Software ausgeführt wird, mittels welcher der Benutzer die Benutzereingabe eingeben kann, welche den Wunsch des Benutzers anzeigt, das Hand-Lichtbogenfügen zu beenden.

Die Benutzerschnittstelle 160, oder zumindest ein Teil von ihr, ist bevorzugt in oder an der Handhabungseinheit 112 angeordnet. Beispielsweise kann die Handhabungseinheit 112 mit einem Brennertaster als Benutzerschnittstelle 160 oder als Teil der Benutzerschnittstelle 160 ausgestattet sein. Wenn der Benutzer den Brennertaster betätigt ("Eintasten"), wird bei dieser Variante dadurch ein Wunsch des Benutzers angezeigt, das Hand-Lichtbogenfügen zu beginnen. Wenn der Benutzer den Brennertaster loslässt ("Austasten") wird dadurch ein Wunsch des Benutzers angezeigt, das Hand-Lichtbogenfügen zu beenden. Somit kann durch den Brennertaster als Reaktion auf die Benutzereingabe zum Beenden des Hand-Lichtbogenfügens, also wenn der Benutzer den Brennertaster loslässt, das End-Signal erzeugt werden.

Der Zeitpunkt der Benutzereingabe einerseits, der Zeitpunkt des Erzeugens des entsprechenden Signals (Start-Signal bzw. End-Signal), sowie der Zeitpunkt, an welchem das Signal an der Steuereinrichtung 140 eingeht, werden hierin weitestgehend als gleichzeitig angesehen. Sollten Zeitunterschiede bestehen, welche über typische Signallaufzeiten hinausgehen, können die hierin beschriebenen Regeln insbesondere auf den Zeitpunkt des Eingehens des Signals an der Steuereinrichtung 140 abstellen.

Die Benutzerschnittstelle 160 kann mehrere betätigbare Einheiten oder Schalter umfassen, die an verschiedenen Positionen des Metall-Schutzgas-Lichtbogenfügegeräts 100 angeordnet sein können. Während der Brennertaster beispielsweise typischerweise an der Handhabungseinheit 112 angeordnet ist, kann etwa eine Einheit (z.B. ein oder mehrere Druck- und/oder Drehknöpfe) der Benutzerschnittstelle 160 an der Stromquelle 150 angeordnet sein.

Die Steuereinrichtung 140 ist dazu eingerichtet, als Reaktion auf das End-Signal die Stromquelle 150, die Haupt-Drahtzuführeinrichtung 110 sowie die Zusatz-Drahtzuführeinrichtung 120 zu steuern, um das Beenden des Hand-Lichtbogenfügens in besonders schonender und/oder kontrollierter Weise durchzuführen.

Dazu werden die Stromquelle 150 und die Haupt-Drahtzuführeinrichtung 110 gesteuert, einen bei Empfang des End-Signals an der lichtbogentragenden abschmelzenden Drahtelektrode 10 anliegenden Lichtbogen 4 nach Empfang des End-Signals noch für mindestens eine Minimal-Zeitdauer aufrechtzuerhalten, bevor das Erlöschen des Lichtbogens 4 bewirkt oder zugelassen wird. Die Minimal-Zeitdauer kann beispielsweise mindestens 10 ms (Millisekunden), bevorzugt mindestens 50 ms betragen.

Außerdem wird die Zusatz-Drahtzuführeinrichtung 120 in Reaktion auf das End-Signal durch die Steuereinrichtung 140 derart gesteuert, dass der abschmelzende Zusatzdraht 20 während der Minimal-Zeitdauer zumindest zeitweise seine Vorschubgeschwindigkeit ändert. Dieses Ändern der Vorschubgeschwindigkeit erfolgt insbesondere dadurch, dass - gemäß einem Steuersignal von der Steuereinrichtung 140 an die Zusatz-Drahtzuführeinrichtung 120 - die Zusatz-Drahtzuführeinrichtung 120 eine Beschleunigung, insbesondere eine negative Beschleunigung (d. h. eine Verzögerung) an dem Zusatzdraht 20 anlegt, sodass sich die Vorschubgeschwindigkeit verändert.

Das Verändern der Vorschubgeschwindigkeit des abschmelzenden Zusatzdrahts 20 kann insbesondere ein Reduzieren auf einen kleineren positiven Wert, ein Reduzieren auf null, und/oder ein Ändern auf eine negative Vorschubgeschwindigkeit (das heißt ein Zurückziehen des abschmelzenden Zusatzdrahts 20) umfassen oder sein.

Wie bereits im Voranstehenden erläutert wurde, wird durch das Aufrechterhalten des Lichtbogens 4 für die Minimal-Zeitdauer noch nach Empfangen des End-Signals eine gewisse Wärmemenge erzeugt, welche bewirkt, dass eine Drahtspitze des abschmelzenden Zusatzdrahts 20 aus dem Schmelzbad an dem Werkstück 1, 2 gelöst wird oder lösbar ist. Wird die Vorschubgeschwindigkeit reduziert oder auf null gesetzt, kann, je nach konkreter Ausführung, die Drahtspitze noch durch den aufrechterhaltenen Lichtbogen 4 abgeschmolzen werden und gleichzeitig der abschmelzende Zusatzdraht 20 so langsam nachgefördert werden bzw. gar nicht nachgefördert werden, dass kein erneuter Kontakt mit dem noch warmen Schmelzbad stattfindet, so dass ein Anhaften des Zusatzdrahts 20 an den Werkstücken 1, 2 vermieden wird.

Wird die Vorschubgeschwindigkeit negativ gesetzt, das heißt, wird der Zusatzdraht 20 zumindest während der Minimal-Zeitdauer zumindest teilweise rückwärts gefördert, kann die Drahtspitze des Zusatzdrahts 20 aktiv aus dem Schmelzbad herausgezogen werden, wodurch ebenfalls ein Anhaften des Zusatzdrahts 20 an dem Werkstück 1, 2 verhindert wird. Aufgrund der Trägheit, mit welcher eine Veränderung der Vorschubgeschwindigkeit des Zusatzdrahts 20 jeweils nur möglich ist, kann mit Empfang des End-Signals (oder eines darauf basierenden Signals) an der Steuereinrichtung 140 eine (insbesondere stetige) Verringerung der Vorschubgeschwindigkeit des Zusatzdrahts 20 von einer zuvor positiven Vorschubgeschwindigkeit bis hin zu einer verschwindenden oder negativen Vorschubgeschwindigkeit erfolgen.

Wie im Vorangehenden ebenfalls bereits beschrieben wurde, ist vorzugsweise auch ein Zeitpunkt, an welchem das Aufrechterhalten des Lichtbogens 4 beendet wird, regel- oder ereignisbasiert eingestellt. In manchen Ausführungsformen kann die Steuereinrichtung 140 dazu eingerichtet sein, das Aufrechterhalten des Lichtbogens 4 nach Empfangen des End-Signals spätestens dann zu beenden, wenn der Lichtbogen für eine Maximal-Zeitdauer aufrechterhalten wurde.

Die Maximal-Zeitdauer kann beispielsweise 500 ms (Millisekunden) oder weniger, bevorzugt 300 ms oder weniger, etwa 200 ms oder weniger betragen. Dies hat den Vorteil, dass der Lichtbogen 4 nicht für eine Zeitdauer aufrechterhalten wird, welche den Benutzer glauben lassen könnte, dass eine Fehlfunktion vorliegt oder welche mit Normen oder Regularien inkompatibel sein könnte.

Das Metall-Schutzgas-Lichtbogenfügegerät 100 kann außerdem eine Zusatzdraht-Kurzschluss-Erfassungseinrichtung 170 umfassen (beispielsweise als Teil der Recheneinrichtung 140, als Teil der Stromquelle 150, und/oder separat davon), welche dazu eingerichtet ist, zu erfassen, ob ein Kurzschluss des abschmelzenden Zusatzdrahts 20 mit dem Werkstück 1, 2 vorliegt. Hierzu kann insbesondere eine Spannung zwischen dem abschmelzenden Zusatzdraht 20 und dem Werkstück 1, 2 erfasst und überwacht werden.

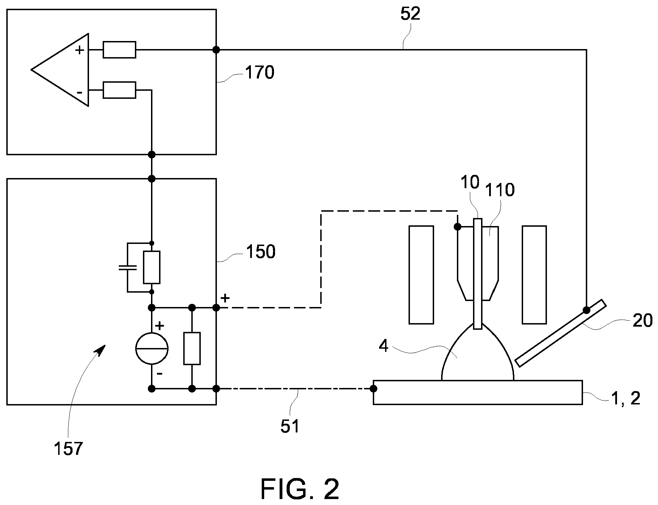

Fig. 2 zeigt eine schematische Darstellung, wie eine Zusatzdraht-Kurzschluss-Erfassungseinrichtung 170 realisiert werden kann. In Fig. 2 ist die Zusatzdraht-Kurzschluss-Erfassungseinrichtung 170 separat von der Stromquelle 150 dargestellt, wobei es sich versteht, dass die beiden auch ineinander integriert ausgebildet sein können.

Wie in Fig. 2 schematisch gezeigt ist, misst die Zusatzdraht-Kurzschluss-Erfassungseinrichtung 170 sowohl ein an dem oder den Werkstück 1, 2 anliegendes erstes elektrisches Potenzial 51 (beispielsweise Schweißminus) als auch ein an dem abschmelzenden Zusatzdraht 20 anliegendes zweites elektrisches Potenzial 52. Eine Veränderung insbesondere des zweiten Potenzials 52 hin zu dem ersten Potenzial 51 (etwa mittels eines Komparators, wie in Fig. 2 angedeutet) wird in dieser Variante als hinreichende Bedingung dafür gewertet, dass ein Kurzschluss des abschmelzenden Zusatzdrahts 20 mit dem Werkstück 1, 2 vorliegt. Mit anderen Worten kann die Zusatzdraht-Kurzschluss-Erfassungseinrichtung 170 dazu eingerichtet sein, das Eintreten des Kurzschlusses anhand einer Spannungsänderung an oder zu dem abschmelzenden Zusatzdraht 20 zu erfassen.

Die Zusatzdraht-Kurzschluss-Erfassungseinrichtung 170 kann auch in anderer Weise realisiert sein, beispielsweise zum Erfassen einer Änderung einer benötigten oder ausgeübten Vorschubkraft zum Fördern des abschmelzenden Zusatzdrahts 20 durch die Zusatz-Drahtzuführeinrichtung 120. Hierzu kann die Zusatzdraht-Kurzschluss-Erfassungseinrichtung 170 dazu eingerichtet sein, einen Motorstrom eines Vorschubmotors der Zusatz-Drahtzuführeinrichtung 120 zu erfassen (entweder zu messen, oder ein diesen indizierendes Signal direkt von dem Vorschubmotor zu erhalten), und darauf basierend das Auftreten eines Kurzschlusses zu erfassen, etwa durch einen sprunghaften Anstieg des Motorstroms. Die Zusatzdraht-Kurzschluss-Erfassungseinrichtung 170 kann somit ganz in Software, ganz in Hardware, oder gemischt ausgebildet sein.

Spannungsmessungen werden dabei bevorzugt derart durchgeführt, dass Spannungssignale, insbesondere zur Reduktion externer Störeinflüsse - gefiltert werden und/oder Mittelwerte gebildet werden. Die derart aufbereiteten Spannungswerte können anschließend über eine Spannungspegelauswertung und/oder eine Analyse der Spannungsänderung durch die Zusatzdraht-Kurzschluss-Erfassungseinrichtung 170 und/oder die Steuereinrichtung 140 weiterverarbeitet werden.

Die Steuereinrichtung 140 kann außerdem dazu eingerichtet sein, das Aufrechterhalten des Lichtbogens 4 nach Empfang des End-Signals spätestens dann zu beenden, wenn durch die Zusatzdraht-Kurzschluss-Erfassungseinrichtung 170 ein Aufbruch des Kurzschlusses des abschmelzenden Zusatzdrahts 20 mit dem Werkstück 1, 2 erfasst wird, während der Lichtbogen 4 aufrechterhalten wird.

Wie oben bereits erläutert wurde, hat dies den besonderen Vorteil, dass der abschmelzende Zusatzdraht 20 automatisch oder leichter aus dem Schmelzbad an dem Werkstück 1, 2 entfernt werden kann, wenn der Lichtbogen 4 noch aufrechterhalten wird. Wird somit durch die Zusatzdraht-Kurzschluss-Erfassungseinrichtung 170 festgestellt, dass kein Kurzschluss des Zusatzdrahts 20 mit dem Werkstück 1, 2 mehr vorliegt, bedeutet dies, dass die elektrisch leitende Verbindung bereits unterbrochen wurde und damit auch keine mechanische Anhaftung mehr vorliegen kann. Somit kann das Aufrechterhalten des Lichtbogens 4 spätestens zu diesem Zeitpunkt vorteilhaft beendet werden, sofern die Minimal-Zeitdauer zu diesem Zeitpunkt bereits abgelaufen ist. Ist dies nicht der Fall, wird die Minimal-Zeitdauer abgewartet und dann der Lichtbogen 4 gelöscht oder sein Erlöschen zugelassen, insbesondere sofort.

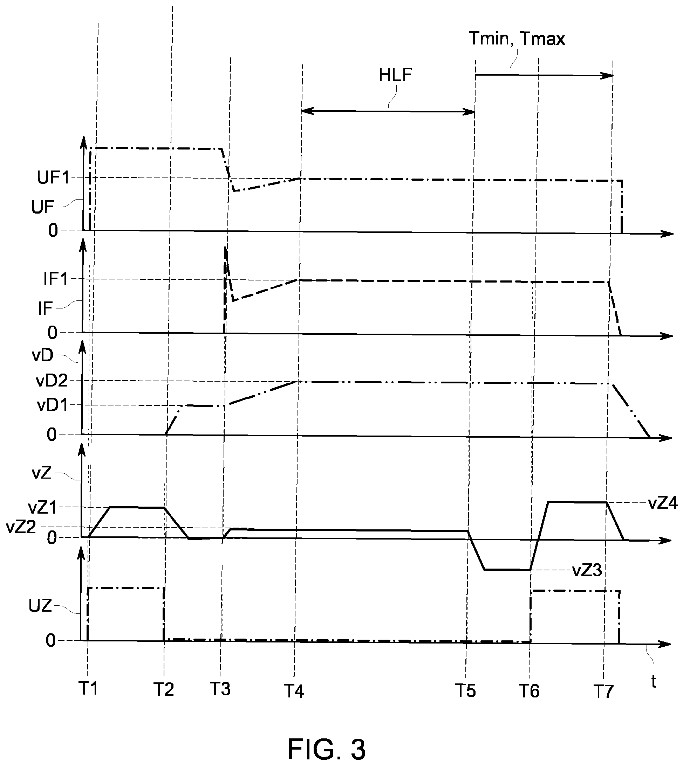

Anhand von Fig. 3 bis Fig. 6 werden im Folgenden weitere Varianten des erfindungsgemäßen Metall-Schutzgas-Lichtbogenfügegeräts 100 erläutert, welche sich insbesondere darauf beziehen, in welcher Art die Steuereinrichtung 140 eingerichtet ist, die Stromquelle 150, die Haupt-Drahtzuführeinrichtung 110 sowie die Zusatz-Drahtzuführeinrichtung 120 zu steuern, dies wiederum jeweils insbesondere nach Empfang des End-Signals und/oder nach Empfang eines Start-Signals, welches als Reaktion auf eine Benutzereingabe zum Beginnen des Hand-Lichtbogenfügens erzeugt wird.

Von oben nach unten zeigen die Fig. 3 bis Fig. 6 jeweils synchronisiert miteinander als Funktion der Zeit t: eine Fügespannung UF (z. B. Schweißspannung zwischen Schweißplus und Schweißminus) der lichtbogentragenden abschmelzenden Drahtelektrode 10, einen Fügestrom IF über den Lichtbogen 4 (z. B. einen Schweißstrom) der lichtbogentragenden abschmelzenden Drahtelektrode 10, eine Vorschubgeschwindigkeit vD der lichtbogentragenden abschmelzenden Drahtelektrode 10, eine Vorschubgeschwindigkeit vZ des abschmelzenden Zusatzdrahts 20, und eine Spannung UZ zwischen dem Werkstück 1, 2 und dem Zusatzdraht 20. Der Fügestrom IF ist auch als "elektrischer Strom des Lichtbogens 4" bezeichenbar.

Zu einem Zeitpunkt T1 wird bei der Variante gemäß Fig. 3 zunächst durch die Benutzerschnittstelle 160 als Reaktion auf eine Benutzereingabe zum Beginnen des Hand-Lichtbogenfügens HLF ein Start-Signal erzeugt. Zu diesem Zeitpunkt T1, also beispielsweise, wenn der Benutzer den Brennertaster betätigt, befindet sich in der gezeigten Variante die lichtbogentragende abschmelzende Drahtelektrode 10 im Stillstand und es liegt eine endliche Spannung UZ (d. h., UZ>0) zwischen dem Zusatzdraht 20 und dem Werkstück 1, 2 vor.

Mit Erzeugung und Empfang des Start-Signals wird zunächst die Vorschubgeschwindigkeit vZ des Zusatzdrahts 20 von null auf einen positiven ersten Geschwindigkeitswert vZ1 beschleunigt und auf diesem aufrechterhalten. Der erste Geschwindigkeitswert vZ1 kann beispielsweise zwischen 1,0m/min (Meter pro Minute) und 6m/min betragen. Dadurch wird der Tatsache Rechnung getragen, dass zu diesem Zeitpunkt, an welchem noch kein Lichtbogen 4 brennt (d. h., IF(T1)=0), der Benutzer möglichst schnell mit dem Hand-Lichtbogenfügen HLF beginnen möchte und keinerlei Nachteil entstehen kann, solange weder die Drahtelektrode 10 noch der abschmelzende Zusatzdraht 20 in Kontakt mit dem Werkstück 1, 2 stehen.

Weiter in Fig. 3 wird zu einem Zeitpunkt T2 festgestellt, beispielsweise mittels der bereits beschriebenen Zusatzdraht-Kurzschluss-Erfassungseinrichtung 170, dass ein Kurzschluss zwischen dem abschmelzenden Zusatzdraht 20 und dem Werkstück 1, 2 vorliegt, hier dadurch angezeigt, dass die Spannungsdifferenz ΔU zu dem Zeitpunkt T2 auf null sinkt.

Die Steuereinrichtung 140 kann dazu eingerichtet sein, zu diesem Zeitpunkt T2 die Vorschubgeschwindigkeit vZ des Zusatzdrahts 20 auf null zu senken, das heißt, den Zusatzdraht 20 anzuhalten. Die in Fig. 3 gezeigten Rampen zwischen null und dem ersten Geschwindigkeitswert vZ1 sind durch die Trägheit des Zusatzdrahts 20 bedingt und sind bevorzugt möglichst steil.

Es kann auch vorgesehen sein, dass die Steuereinrichtung 140 eine ab dem Zeitpunkt T1 geförderte Drahtlänge des Zusatzdrahts 20 (und/oder, äquivalent, eine Zeitdauer) misst, und bei Erreichen eines jeweiligen Höchstwerts das Fördern des Zusatzdrahts 20 beendet, d. h. auf null senkt. In diesem Fall kann das Erfassen des Kurzschlusses entfallen. Der Höchstwert für die geförderte Drahtlänge kann beispielsweise einen Wert zwischen 15mm und 25mm aufweisen. In Abhängigkeit von dem Integral unter der Kurve und/oder dem ersten Geschwindigkeitswert vZ1 und der Steilheit der Rampen kann eine Höchstzeitdauer ab dem Zeitpunkt T2 diesem Höchstwert für die geförderte Drahtlänge entsprechend definiert sein.

Die Steuereinrichtung 140 ist weiterhin gemäß Fig. 3 dazu eingerichtet, zu dem Zeitpunkt T2 die Haupt-Drahtzuführeinrichtung 110 zu steuern, die abschmelzende Drahtelektrode 10 vorwärts zu fördern, das heißt, die Vorschubgeschwindigkeit vD der Drahtelektrode 10 auf einen ersten Geschwindigkeitswert vD1 zu erhöhen, wobei der erste Geschwindigkeitswert vD1 zwischen 0,5 m/min und 10 m/min betragen kann.

Zu einem Zeitpunkt T3 wird der Lichtbogen 4 gezündet, d. h., es entsteht der erste Stromfluss über die lichtbogentragende abschmelzende Drahtelektrode 10. Ab diesem Zeitpunkt T3 steuert die Steuereinrichtung 140 die Zusatz-Drahtzuführeinrichtung 120, den abschmelzenden Zusatzdraht 20 vorwärts zu fördern, bevorzugt mit einem zweiten Geschwindigkeitswert vZ2, welcher kleiner ist als der erste Geschwindigkeitswert vZ1. Wie im Vorangehenden bereits erläutert wurde, kann durch den zweiten Geschwindigkeitswert vZ2 insbesondere für den Benutzer ein haptisches Feedback über eine gewünschte oder empfohlene Schweißgeschwindigkeit bereitgestellt werden. Der zweite Geschwindigkeitswert vZ2 kann beispielsweise zwischen 0,1m/min und 3 m/min betragen, etwa zwischen 0,3 m/min und 1,5 m/min, beispielsweise 1m/min. Demgegenüber kann der erste Geschwindigkeitswert vZ1 größer sein, da damit kein haptisches Feedback verbunden ist und ein schneller Kontakt mit dem Werkstück 1, 2 gewünscht ist.

Ab dem Zeitpunkt T3 wird optional außerdem durch die Steuereinrichtung 140 die Vorschubgeschwindigkeit der Drahtelektrode 10 auf einen höheren, zweiten Geschwindigkeitswert vD2 erhöht, welcher bevorzugt für das Hand-Lichtbogenfügen HLF aufrechterhalten wird. Das tatsächliche Hand-Lichtbogenfügen HLF beginnt bevorzugt zu einem Zeitpunkt T4, an welchem Fügespannung UF, Fügestrom IF, Vorschubgeschwindigkeit vD der Drahtelektrode 10, und Vorschubgeschwindigkeit vZ des Zusatzdrahts 20 jeweils den gewünschten konstanten Wert erreicht haben (UF1, IF1, vD2, vZ2).

Zum Zeitpunkt T3, oder daran mit einer definierten Verzögerung anschließend, kann ein Lichtbogen-Zündprozess durchgeführt werden, für welchen beispielsweise die abschmelzende Drahtelektrode 10 zurückbewegt werden kann, eine Hochfrequenzspannung an die abschmelzende Drahtelektrode 10 angelegt werden kann und/oder dergleichen mehr (in Fig. 3 nicht dargestellt).

In jedem Fall ist die Steuereinrichtung 140 vorteilhaft dazu eingerichtet, die Stromquelle 150 und die Haupt-Drahtzuführeinrichtung 110 frühestens dann dazu zu steuern, den Lichtbogen 4 für das Hand-Lichtbogenfügen HLF an der abschmelzenden Drahtelektrode 10 zu erzeugen, wenn der Kurzschluss zwischen dem abschmelzenden Zusatzdraht 20 und dem Werkstück 1, 2 erfasst wurde. Mit anderen Worten ist die Steuereinrichtung 140 derart eingerichtet, dass T3 immer nach T2 liegt, d. h. T3>T2.

Irgendwann signalisiert ein Benutzer, dass er das Hand-Lichtbogenfügen HLF beenden möchte und führt dafür die Benutzereingabe zum Beenden das Hand-Lichtbogenfügens HLF an der Benutzerschnittstelle 160 durch, beispielsweise durch Austasten des Brennertasters. Als Reaktion darauf wird durch die Benutzerschnittstelle 160 zu einem Zeitpunkt T5 das End-Signal erzeugt. Bei der Variante gemäß Fig. 3 wird zu diesem Zeitpunkt T5 die Zusatz-Drahtzuführeinrichtung 120 durch die Steuereinrichtung 140 gesteuert, die Vorschubgeschwindigkeit vZ der abschmelzenden Drahtelektrode 20 sofort stetig, insbesondere mit gleichbleibender Verzögerung, zu verringern, bis die Vorschubgeschwindigkeit vZ einen negativen dritten Geschwindigkeitswert vZ3 angenommen hat.

Mit anderen Worten wird als Reaktion auf das End-Signal, welches von der Benutzerschnittstelle 160 als Reaktion auf die Benutzereingabe zum Beenden des Hand-Lichtbogenfügens HLF erzeugt wird, unmittelbar damit begonnen, die Vorschubgeschwindigkeit vZ des abschmelzenden Zusatzdrahts 20 schnellstmöglich abzubremsen und danach rückwärts zu fördern, so dass sich der abschmelzende Zusatzdraht 20 (gleichbleibende Position der Handhabungseinheit 112 angenommen) von dem Werkstück 1, 2 entfernt und damit insbesondere aus dem Schmelzbad herausgezogen wird.

Wie erläutert beginnt außerdem als Reaktion auf den Empfang des End-Signals eine Zeitmessung durch die Steuereinrichtung 140, zumindest bezüglich einer Minimal-Zeitdauer Tmin, optional zusätzlich bezüglich einer Maximal-Zeitdauer Tmax. Das heißt, es wird fortlaufend geprüft, ob die Minimal-Zeitdauer Tmin bereits überschritten wurde und ob die Maximal-Zeitdauer Tmax bereits erreicht wurde.

Bei der in Fig. 3 gezeigten Variante ist die Zeitdauer, für welche der Lichtbogen 4 nach Empfang des End-Signals weiter aufrechterhalten wird, festgelegt, so dass Tmin gleich Tmax ist und beispielsweise ein Wert zwischen 200ms und 300ms, z. B. 250ms beträgt. Damit der Zusatzdraht 20 nämlich während weiter abgeschmolzen wird, muss er eine bestimmte Mindestwärme erzeugen, welche typischerweise auch die Drahtelektrode 10 weiter abschmilzt. Um den Lichtbogen 4 daher aufrechterhalten zu können, muss entsprechend die Drahtelektrode 10 weiter gefördert werden, insbesondere für dieselbe Zeitdauer wie auch der Lichtbogen 4 aufrechterhalten wird.

Wird durch die Steuereinrichtung 140 angewiesen, dass das Aufrechterhalten des Lichtbogens 4 beendet werden kann, das heißt, dass das Erlöschen des Lichtbogens 4 bewirkt oder zugelassen werden soll, kann, wie in Fig. 3 gezeigt ist, die Vorschubgeschwindigkeit vD der abschmelzenden Drahtelektrode 10 auf null verringert werden und beispielsweise gleichzeitig der an der Drahtelektrode 10 anliegend Schweißstrom abgeschaltet oder auf null abgesenkt werden.

In der mittleren Zeile von Fig. 3 ist eine weitere optionale Variante dargestellt, gemäß welcher durch die Zusatzdraht-Kurzschluss-Erfassungseinrichtung 170 weiterhin überwacht wird, wann der Kurzschluss zwischen dem Zusatzdraht 20 und dem Werkstück 1, 2, welcher während des Hand-Lichtbogenfügens HLF typischerweise ständig aufrechterhalten wird, aufgebrochen wird.

Gemäß Fig. 3 ist dies zu einem Zeitpunkt T6 der Fall, an welchem das Rückwärtsfördern des Zusatzdrahts 20 mit dem dritten Geschwindigkeitswert vZ3 dazu geführt hat, dass sich die Drahtspitze des Zusatzdrahts 20 schließlich nicht mehr in elektrischem Kontakt mit dem Werkstück 1, 2 befindet. Optional kann nun durch die Steuereinrichtung 140 erfasst werden, um welche Drahtlänge der abschmelzenden Zusatzdraht 20 rückwärts gefördert wurde, bis zum Zeitpunkt T6 der Kurzschluss aufgebrochen wurde. Die rückwärts geförderte Drahtlänge kann beispielsweise durch die Steuereinrichtung 140 aus einer Information über eine Drehzahl einer Vorschubrolle eines Vorschubmotors der Zusatz-Drahtzuführeinrichtung 120 bestimmt werden.

Die erfasste rückwärts geförderte Drahtlänge gibt somit ein Drahtspiel an, welches der abschmelzende Zusatzdraht 20 zum Zeitpunkt T6 aufweist. Um den abschmelzenden Zusatzdraht 20 nun für einen weiteren Hand-Lichtbogenfügevorgang wieder in eine optimale Ausgangslage zu bringen, kann vorgesehen sein, dass die Steuereinrichtung 140 weiterhin dazu eingerichtet ist, den abschmelzenden Zusatzdraht 20, nachdem er rückwärts gefördert wurde, unter Berücksichtigung der erfassten Drahtlänge vorwärts zu fördern, bis eine vorbestimmte oder einstellbare Stick-Out-Länge vorliegt.

Bei der Stick-Out-Länge handelt es sich um einen Abstand, um welchen die Drahtspitze des abschmelzenden Zusatzdrahts 20 vor einer vordersten Spitze der Zusatz-Drahtzuführeinrichtung 120, hier also deren Drahtendenführung 123, hervorsteht. Das Drahtspiel kann dabei zwischen einem Vorschubmotor der Zusatz-Drahtzuführeinrichtung 120 und einem Reservoir, beispielsweise einer Spindel, des abschmelzenden Zusatzdrahts 20 angeordnet sein, beispielsweise teilweise in einer Seele und/oder einem Schlauchpaket.

Das Fördern des abschmelzenden Zusatzdrahts 20 in Vorwärtsrichtung ab dem Zeitpunkt T6 kann mit einer Vorschubgeschwindigkeit mit einem Geschwindigkeitswert vZ4 von mindestens 5 m/min, bevorzugt von mindestens 8 m/min, besonders bevorzugt zwischen 8 m/min und 15 m/min erfolgen, etwa mit einer Vorschubgeschwindigkeit von 10 m/min. Alternativ oder gleichzeitig kann der vierte Geschwindigkeitswert vZ4 größer sein als der erste Geschwindigkeitswert vZ1, größer als der zweite Geschwindigkeitswert vZ2 und/oder größer als der Betrag des dritten Geschwindigkeitswerts vZ3.

Da nämlich die Länge, um welche der abschmelzende Zusatzdraht 20 zu fördern ist, aufgrund der beschriebenen Messung des Drahtspiels und der bekannten gewünschten Stick-Out-Länge insgesamt bekannt ist (und nicht noch etwa durch eine Kurzschlussmessung bestimmt werden muss), kann mit einer besonders hohen Vorschubgeschwindigkeit vZ gefördert werden, um den gewünschten Anfangszustand für den abschmelzenden Zusatzdraht 20 besonders schnell erreichen zu können. Die Stick-Out-Länge kann beispielsweise durch den Benutzer einstellbar sein, beispielsweise mittels der Benutzerschnittstelle 160.

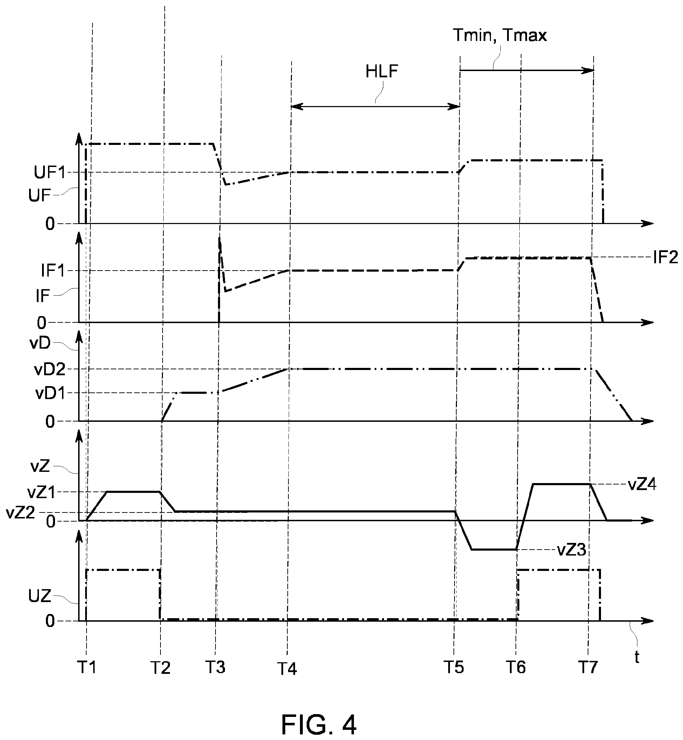

Fig. 4 veranschaulicht weitere Varianten, gemäß welcher die Steuereinrichtung 140 eingerichtet sein kann. Eine Variante unterscheidet sich von der aus Fig. 3 dadurch, dass mit dem Zeitpunkt T2 der erste Geschwindigkeitswert vZ1 der Vorschubgeschwindigkeit vZ des Zusatzdrahts 20 nicht auf null abgesenkt wird, sondern unmittelbar (nach einer notwendig, aber bevorzugt möglichst kurzen Rampe) auf den zweiten Geschwindigkeitswert vZ2, mit welchem auch das Hand-Lichtbogenfügen HLF durchgeführt wird.

Fig. 4 veranschaulicht außerdem, dass gemäß einer weiteren Variante die Steuereinrichtung 140 dazu eingerichtet sein kann, auf das End-Signal zum Zeitpunkt T5 hin die Stromquelle 150 zu steuern, den Fügestrom IF von seinem ersten Wert IF1 während des Hand-Lichtbogenfügens HLF auf einen höheren zweiten Wert IF2 anzuheben sowie die Fügespannung UF von ihrem ersten Wert UF1 während des Hand-Lichtbogenfügens HLF auf einen höheren zweiten Wert UF2 anzuheben, wobei IF2 beispielsweise zwischen 10% und 50% höher sein kann als IF1, beispielsweise zwischen 20% und 40% höher, etwa 25% höher. Hierdurch wird zusätzliche Wärme erzeugt, sodass dafür die Minimal-Zeitdauer Tmin kürzer ausfallen kann, beispielsweise mit nur 10 Millisekunden. Demselben Zweck kann es dienen, die Stromzeitfläche für 100 Millisekunden oder mehr zu verlängern.

Bei einer weiteren Variante kann eine Messung (oder: Überwachung) der Spannungsdifferenz UZ ausbleiben, und stattdessen das Fördern des Zusatzdrahts 20 nach dem Zeitpunkt T1 auf den ersten Geschwindigkeitswert vZ1 beschleunigt werden und dort verbleiben, bis eine bestimmte Drahtlänge (beispielsweise zwischen 15mm und 25 mm, etwa 20mm) gefördert wurde (oder eine entsprechende Zeitspanne vergangen ist).

Auch nach dem Zeitpunkt T5 kann in dieser Variante das Rückwärts- und Vorwärts-Fördern des Zusatzdrahts 20 durch entsprechende Höchstwerte für die geförderte Drahtlänge ausgelöst werden.

Der Zeitpunkt T7 kann beispielsweise ausgelöst (oder: definiert) werden durch eine vorbestimmte Drahtlänge, um die rückwärts gefördert wurde. Die Steuereinrichtung 140 kann weiterhin dazu eingerichtet sein, zu diesem Zeitpunkt T7 auch die Haupt-Drahtzuführeinrichtung 110 zu steuern, das Fördern der lichtbogentragenden abschmelzenden Drahtelektrode 10 zu bremsen, bevorzugt sofort abzubremsen, besonders bevorzugt schnellstmöglich abzubremsen. Ebenso kann zu dem Zeitpunkt T7 auch der Lichtbogen 4 gelöscht werden, etwa indem die Steuereinrichtung 140 die Stromquelle 150 steuert, den Schweißstrom abzustellen.

Danach kann wiederum, wie schon mit Bezug auf Fig. 3 beschrieben wurde, durch erneutes Vorwärtsfördern des Zusatzdrahts 20 eine einstellbare oder vorbestimmte Stick-Out-Länge des Zusatzdrahts 20 hergestellt werden. Aufgrund der bekannten Drahtlänge, um die zuvor rückwärts gefördert wurde, ist auch in dieser Variante bekannt, um wie viel der Zusatzdraht 20 dafür noch vorwärts gefördert werden muss.

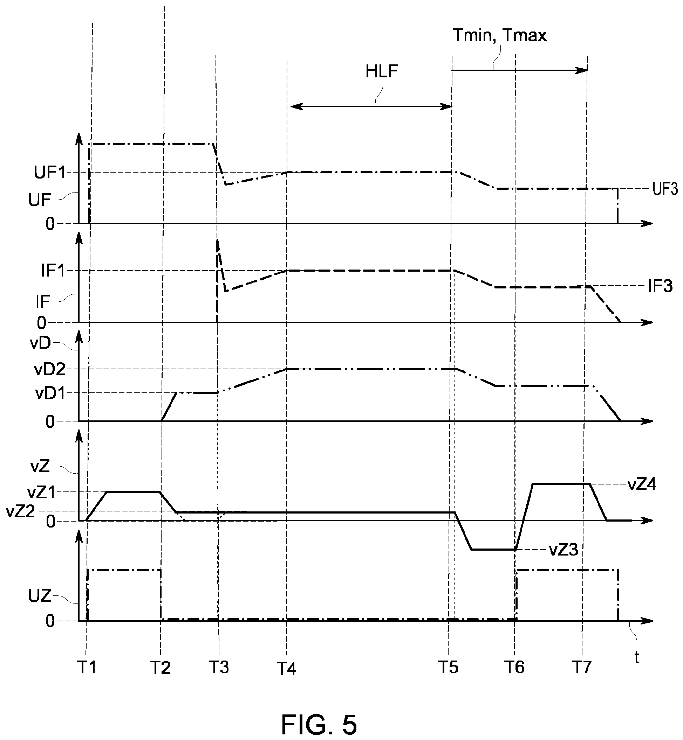

Fig. 5 zeigt eine weitere Variante. Im Gegensatz zu der Variante von Fig. 3 ist die Steuereinrichtung 140 in der Variante gemäß Fig. 5 dazu eingerichtet auf das End-Signal hin zum Zeitpunkt T5 die Stromquelle 150 zu steuern, die Fügespannung UF auf einen dritten Wert UF3 zu senken, der kleiner ist als der Wert UF1 während des Hand-Lichtbogenfügens HLF, und den Fügestrom IF auf einen dritten Wert IF3 zu senken, der kleiner ist als der Wert IF1 während des Hand-Lichtbogenfügens HLF.

Dies kann von dem Benutzer des Metall-Schutzgas-Lichtbogenfügegeräts 100 beispielsweise dazu genutzt werden, die niedrigere erzeugte Wärme am Ende des Hand-Lichtbogenfügens HLF zu verwenden, einen Krater am Ende der Fügenaht zu füllen.

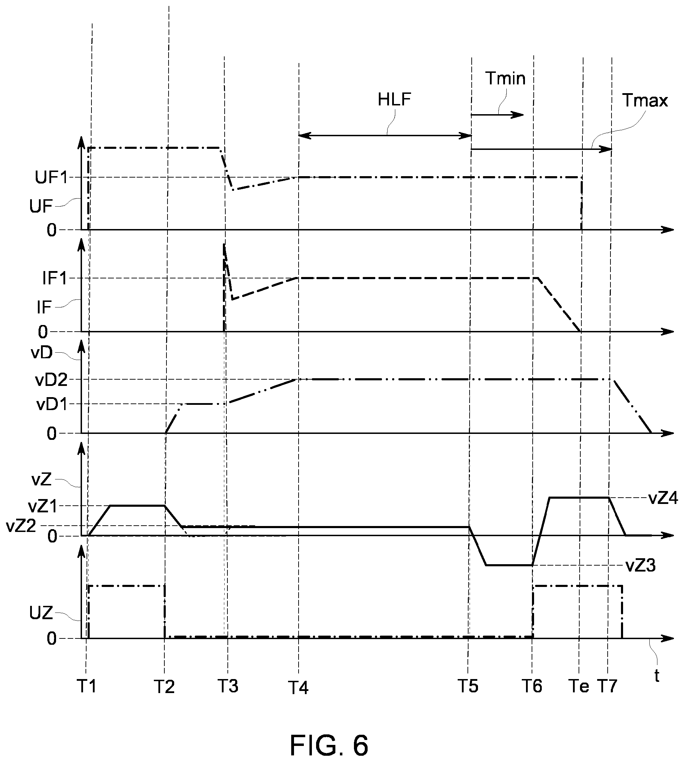

Je nach der konkreten Ausführungsform der vorliegenden Erfindung kann die Steuereinrichtung 140 lediglich zum Reagieren auf das Start-Signal eingerichtet sein, oder lediglich zum Reagieren auf das End-Signal, oder beides. Die jeweils bis zum Beginn des Hand-Lichtbogenfügens HLF durchgeführten Maßnahmen (also etwa zwischen T1 und T4) und die jeweils danach durchgeführten Maßnahmen (also etwa ab T5) können zwischen den dargestellten Varianten der Fig. 3 und Fig. 6 jeweils frei miteinander kombiniert werden, auch wenn die in den Figuren dargestellten Kombinationen besonders bevorzugt sind.

Fig. 6 zeigt eine weitere Variante als eine Abwandlung von Fig. 3. In der Variante nach Fig. 6 ist die Steuereinrichtung 140 derart eingerichtet, dass der Lichtbogen 4 unmittelbar zu dem Zeitpunkt T6 gelöscht wird (d. h., sein Erlöschen bewirkt oder zugelassen wird, hier durch Abschalten des Fügestroms IF), allerdings nur unter der Bedingung, dass Tmin ≤ T6 ≤ Tmax gilt. In Fig. 6 erfüllt T6, d. h., der Zeitpunkt, an welchem erkannt wird, dass kein elektrischer Kontakt des abschmelzenden Zusatzdrahts 20 mit dem Werkstück 1, 2 mehr vorliegt, diese Bedingung.

Wäre T6 <Tmin, würde die Steuereinrichtung 140 eine Information über das erfolgte Aufbrechen des Kurzschlusses speichern (z. B. durch Setzen einer Flagge) und daraufhin das Löschen des Lichtbogens 4 sofort mit dem Ablauf von Tmin anweisen. Würde der elektrische Kontakt mit Ablauf von Tmax noch bestehen, würde die Steuereinrichtung 140 das Löschen des Lichtbogens 4 sofort mit Ablauf von Tmax anweisen. Bei der Variante gemäß Fig. 6 brennt der Lichtbogen 4 also (unbeschadet der Bedingungen von Tmin und Tmax) nur genau so lange, wie es nötig ist, um den elektrischen Kontakt des abschmelzenden Zusatzdrahts 20 mit dem Werkstück 1, 2 aufzuheben. Es versteht sich, dass die anderen beschriebenen Varianten, also insbesondere auch die gemäß Fig. 4 oder Fig. 5, ebenfalls auf diese Weise modifiziert werden können.

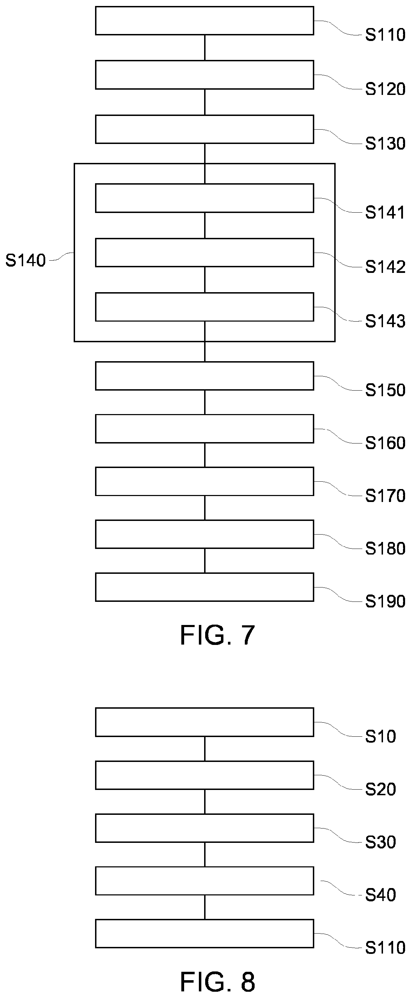

Fig. 7 zeigt ein schematisches Flussdiagramm zum Erläutern eines Verfahrens gemäß einer Ausführungsform des zweiten Aspekts der vorliegenden Erfindung, d.h., eines Verfahrens zum Beenden eines Hand-Lichtbogenfügens, insbesondere mittels eines Metall-Schutzgas-Lichtbogenfügegeräts 100.

Das Verfahren nach Fig. 7 ist gemäß allen in Bezug auf den erste Aspekt der vorliegenden Erfindung beschriebenen Ausführungsformen, Varianten, Optionen, und Verfeinerungen von Ausführungsformen anpassbar und umgekehrt, insbesondere wie im Vorangehenden mit Bezug auf die Fig. 1 bis Fig. 6 beschrieben wurde. Dementsprechend können die Elemente des Metall-Schutzgas-Lichtbogenfügegeräts 110, insbesondere die Haupt-Drahtzuführeinrichtung 110, die Zusatz-Drahtzuführeinrichtung 120, die Steuereinrichtung 140, und die Stromquelle 150, jeweils zum Durchführen aller beschriebenen oder implizierten Varianten des erfindungsgemäßen Verfahrens gemäß Ausführungsformen des zweiten Aspekts der vorliegenden Erfindung angepasst werden.

Das Verfahren ist auch unabhängig von dem erfindungsgemäßen Metall-Schutzgas-Lichtbogenfügegerät 100 durchführbar, wird jedoch zur besseren Veranschaulichung im Folgenden teilweise unter Verwendung von Bezugszeichen aus den Fig. 1 bis Fig. 6 erläutert werden.

In einem Schritt S110 wird durch einen Benutzer ein Hand-Lichtbogenfügen HLF eines Werkstücks 1, 2 mittels eines Lichtbogens 4 durchgeführt, welcher an einer lichtbogentragenden abschmelzenden Drahtelektrode 10 anliegt, wobei ein abschmelzender Zusatzdraht 20 zugeführt wird. Das Fördern der lichtbogentragenden abschmelzenden Drahtelektrode 10 kann insbesondere so erfolgen, wie im Vorangehenden mit Bezug auf die Haupt-Drahtzuführeinrichtung 110 beschrieben wurde, und das Fördern des abschmelzenden Zusatzdrahts 20 insbesondere so, wie im Vorangehenden mit Bezug auf die Zusatz-Drahtzuführeinrichtung 120 beschrieben wurde.

Bevorzugt werden sowohl die Drahtelektrode 10 als auch der Zusatzdraht 20 während des Hand-Lichtbogenfügens HLF teilweise oder dauerhaft mit jeweils konstanter Vorschubgeschwindigkeit vD, vZ gefördert, wobei die beiden Vorschubgeschwindigkeiten vD, vZ, während des Hand-Lichtbogenfügens HLF besonders bevorzugt unterschiedlich sind, d. h., vD (HLF) ≠ vZ (HLF) .

Wie im Stand der Technik bekannt und/oder wie im Vorangehenden beschrieben wurde, kann dies dadurch erfolgen, dass ein Benutzer eine Handhabungseinheit 112 eines Metall-Schutzgas-Lichtbogenfügegeräts 100 an einer geplanten Fügenaht (z. einer Schweißnaht) entlangführt. Dabei kann dem Benutzer vorzugsweise, wie ebenfalls beschrieben wurde, durch eine Gegenkraft GK (oder eine Kraftkomponente KK davon), welche als Reaktion auf eine von einem Zusatzdraht 20 auf das Werkstück 1, 2 ausgeübte Kraft K entsteht, ein haptisches Feedback (oder eine intuitive Anleitung) insbesondere über eine empfohlene oder ideale Fügegeschwindigkeit bereitgestellt werden.

In einem Schritt S120 erfolgt ein automatisches Erfassen einer Benutzereingabe zum Beenden des Hand-Lichtbogenfügens HLF. Dies kann beispielsweise erfolgen wie im Vorangehenden mit Bezug auf die Benutzerschnittstelle 160, insbesondere den Brennertaster, beschrieben wurde. Das heißt bei der Benutzereingabe kann es sich beispielsweise um ein Austasten des Benutzers handeln. Das Erfassen S120 der Benutzereingabe kann das Erzeugen des im Vorangehenden beschriebenen End-Signals umfassen oder auslösen. Das Erfassen S120 der Benutzereingabe kann auch den Eingang des erzeugten End-Signals an der Steuereinrichtung 140 umfassen oder dadurch charakterisiert werden.

Auf das Erfassen S120 der Benutzereingabe hin, bevorzugt unmittelbar damit beginnend, erfolgt ein automatisches Aufrechterhalten S130 des bei Erfassen S120 der Benutzereingabe an der lichtbogentragenden abschmelzenden Drahtelektrode 10 anliegenden Lichtbogens 4 noch für mindestens eine Minimal-Zeitdauer Tmin nach dem Erfassen S120 der Benutzereingabe, und ein zumindest zeitweises Ändern S140 der Vorschubgeschwindigkeit vZ des abschmelzenden Zusatzdrahts 20 zumindest während der Minimal-Zeitdauer Tmin. Die Schritte S130 und S140 können insbesondere derart ausgeführt werden, wie sie im Vorangehenden mit Bezug auf die Steuereinrichtung 140 und/oder mit Bezug auf die Fig. 3 bis Fig. 6 beschrieben wurden.

Das Ändern S140 der Vorschubgeschwindigkeit vZ des abschmelzenden Zusatzdrahts 20 kann insbesondere ein Reduzieren der zunächst positiven Vorschubgeschwindigkeit vZ2 während des Hand-Lichtbogenfügens HLF auf einen verschwindenden Wert (d. h., auf null) und/oder auf einen negativen Wert vZ3 umfassen, etwa wie mit Bezug auf die Fig. 3 bis Fig. 6 bereits beschrieben wurde. Mit anderen Worten kann das Ändern S140 der Vorschubgeschwindigkeit vZ des abschmelzenden Zusatzdrahts 20 ein Abbremsen S141, ein Anhalten S142, und/oder ein Rückwärtsfördern S143 des abschmelzenden Zusatzdrahts 20 umfassen.

Beispielsweise kann in einem Schritt S150 automatisch eine Zeit gemessen werden, welche seit dem Erfassen S120 der Benutzereingabe (oder seit dem Erzeugen eines End-Signals als Reaktion auf das Erfassen S120 der Benutzereingabe) verstrichen ist, und das Aufrechterhalten S140 des Lichtbogens 4 spätestens dann abgebrochen werden, wenn eine Maximal-Zeitdauer Tmax verstrichen ist.

Alternativ oder zusätzlich kann in einem Schritt S160 automatisch erfasst werden, dass ein Kurzschluss zwischen dem Zusatzdraht 20 und dem Werkstück 1, 2 aufgebrochen (oder: aufgelöst) wurde, und daraufhin das Aufrechterhalten S130 des Lichtbogens 4 beendet werden (siehe auch die Beschreibung zu Fig. 5 und Fig. 6).

In einem Schritt S170 kann erfasst werden, um welche Drahtlänge der abschmelzende Zusatzdraht 20 nach dem Erfassen S120 der Benutzereingabe rückwärts gefördert S143 wurde (falls dies erfolgt ist) bis durch die Zusatzdraht-Kurzschluss-Erfassungseinrichtung 170 der Aufbruch des Kurzschlusses erfasst S160 wurde.

In einem Schritt S180 kann daraufhin der abschmelzende Zusatzdraht 20, nachdem er rückwärts gefördert S143 wurde, unter Berücksichtigung der erfassten Drahtlänge vorwärts auf eine eingestellte Stick-Out-Länge gefördert werden. Hierzu kann der abschmelzende Zusatzdraht 20 beispielsweise, wenn das Rückwärtsfördern S143 beendet wurde, durch den zugeordneten Vorschubmotor um genau die erfasste Drahtlänge plus die gewünschte Stick-Out-Länge vorwärts gefördert S180 werden.

Auch wenn der abschmelzende Zusatzdraht 20 nicht, oder nicht nur, rückwärts gefördert S143 wurde, kann unter Verwendung der Information, wie schnell der abschmelzende Zusatzdraht 20 jeweils und in welche Richtung er jeweils gefördert wurde, eine aktuelle Position und/oder ein Drahtspiel des Zusatzdrahts 20 berechnet, und für ein entsprechendes Fördern des Zusatzdrahts 20 zum Herstellen der gewünschten Stick-Out-Länge verwendet werden.

Das Vorwärtsfördern S180 kann insbesondere mit einer Drahtvorschubgeschwindigkeit von mindestens 5 Metern pro Minute, bevorzugt von mindestens 8 Metern pro Minute, besonders bevorzugt zwischen 8 und 15 Metern pro Minute erfolgen, insbesondere mit einer Drahtvorschubgeschwindigkeit von 10 Metern pro Minute. Die gewünschte Stick-Out-Länge kann vorgegeben sein, oder durch einen Benutzer in einem Schritt S190 eingestellt werden, etwa mittels der Benutzerschnittstelle 160.

Fig. 8 zeigt ein schematisches Flussdiagramm zum Erläutern eines Verfahrens gemäß einer Ausführungsform des dritten Aspekts der vorliegenden Erfindung, d.h., eines Verfahrens zum Beginnen eines Hand-Lichtbogenfügens, insbesondere mittels eines Metall-Schutzgas-Lichtbogenfügegeräts 100.

Das Verfahren nach Fig. 8 ist gemäß allen in Bezug auf den erste Aspekt der vorliegenden Erfindung beschriebenen Ausführungsformen, Varianten, Optionen, und Verfeinerungen von Ausführungsformen anpassbar und umgekehrt, insbesondere wie im Vorangehenden mit Bezug auf die Fig. 1 bis Fig. 6 beschrieben wurde.

Dementsprechend können die Elemente des Metall-Schutzgas-Lichtbogenfügegeräts 110, insbesondere die Haupt-Drahtzuführeinrichtung 110, die Zusatz-Drahtzuführeinrichtung 120, die Steuereinrichtung 140, und die Stromquelle 150, jeweils zum Durchführen aller beschriebenen oder implizierten Varianten des erfindungsgemäßen Verfahrens gemäß Ausführungsformen des dritten Aspekts der vorliegenden Erfindung angepasst werden. Das Verfahren ist auch unabhängig von dem erfindungsgemäßen Metall-Schutzgas-Lichtbogenfügegerät 100 durchführbar, wird jedoch zur besseren Veranschaulichung im Folgenden teilweise unter Verwendung von Bezugszeichen aus den Fig. 1 bis Fig. 6 erläutert werden.

In einem Schritt S10 wird automatisch eine Benutzereingabe zum Beginnen des Hand-Lichtbogenfügens HLF erfasst. Dies kann beispielsweise erfolgen wie im Vorangehenden mit Bezug auf die Benutzerschnittstelle 160, insbesondere den Brennertaster, beschrieben wurde. Das heißt bei der Benutzereingabe kann es sich beispielsweise um ein Eintasten des Benutzers, oder ein Betätigen eines anderen Schalters zum Beginnen des Hand-Lichtbogenfügens HLF handeln. Das Erfassen S10 der Benutzereingabe kann das Erzeugen des im Vorangehenden beschriebenen Start-Signals umfassen oder auslösen.

Auf das Erfassen S10 der Benutzereingabe hin wird ein abschmelzender Zusatzdrahts 20 automatisch vorwärts gefördert S20 (oder: vorgeschoben), bis in einem Schritt S30 ein Kurzschluss zwischen dem abschmelzenden Zusatzdraht 20 und dem zu fügenden Werkstück 1, 2 automatisch erfasst wird. Das Fördern S20 des Zusatzdrahts 20 erfolgt beispielsweise, wie im Vorangehenden beschrieben, durch eine Zusatz-Drahtzuführeinrichtung 120 des Metall-Schutzgas-Lichtbogenfügegeräts 100. Das automatische Erfassen S30 des Kurzschlusses kann beispielsweise so erfolgen, wie es im Vorangehenden mit Bezug auf die Zusatzdraht-Kurzschluss-Erfassungseinrichtung 170 beschrieben wurde.

In einem Schritt S40 wird automatisch an einer lichtbogentragenden abschmelzenden Drahtelektrode 10 Lichtbogens 4 zum Hand-Lichtbogenfügen HLF erzeugt, allerdings frühestens dann (insbesondere genau dann), wenn der Kurzschluss zwischen dem abschmelzenden Zusatzdraht 20 und dem Werkstück 1, 2 erfasst S30 wurde. Das Erzeugen S40 des Lichtbogens 4 kann insbesondere erfolgen wie im Vorangehenden mit Bezug auf die Haupt-Drahtzuführeinrichtung 110, die Steuereinrichtung 140, und/oder die Stromquelle 150 beschrieben.

In einem Schritt S110 erfolgt ein Hand-Lichtbogenfügen HLF des Werkstücks 1, 2 mittels des erzeugten S40 Lichtbogens 4, wobei der abschmelzende Zusatzdraht 20 bis zum Erfassen des Kurzschlusses mit einer höheren Vorschubgeschwindigkeit vZ1 vorwärts gefördert wird als bei dem nachfolgenden Hand-Lichtbogenfügen HLF während des Brennens des Lichtbogens 4 - siehe hierzu auch die Fig. 3 bis Fig. 6.

Der Schritt S110 des Verfahrens gemäß Fig. 8 kann derselbe Schritt sein wie der Schritt S110 des Verfahrens gemäß Fig. 7, sodass sich an das Hand-Lichtbogenfügen HLF einer, mehrere, oder alle der Schritte S120 bis S160 anschließen können, wie im Vorangehenden beschrieben wurde. Die Erfindung stellt somit, etwa wenn die Verfahren nach Fig. 8 und Fig. 7 hintereinander kombiniert ausgeführt werden, auch ein Verfahren zum Beginnen, Durchführen, und Beenden eines Hand-Lichtbogenfügens HLF bereit.

Die vorstehende Beschreibung der offenbarten Ausführungsformen enthält lediglich Beispiele für mögliche Umsetzungen, die beschrieben werden, um einen Fachmann in die Lage zu versetzen, die vorliegende Erfindung herzustellen oder verwenden zu können. Verschiedene Variationen und Modifikationen dieser Ausführungsformen sind für den Fachmann - nach Kenntnis der vorliegenden Erfindung - leicht ersichtlich, und die hierin definierten allgemeinen Prinzipien können auf andere Ausführungsformen angewendet werden, ohne vom Umfang der vorliegenden Offenbarung abzuweichen.

Somit soll die vorliegende Erfindung nicht auf die hierin gezeigten, spezifischen Ausführungsformen beschränkt sein, sondern ihr soll der breiteste Umfang zugestanden werden, der mit den hierin offenbarten Prinzipien und Merkmalen übereinstimmt.

### Bezugszeichenliste

- 1: erster Werkstückteil
- 2: zweiter Werkstückteil
- 3: Stumpfstoß
- 4: Lichtbogen
- 5: Schutzgas
- 10: lichtbogentragende abschmelzende Drahtelektrode
- 20: abschmelzender Zusatzdraht
- 51: erstes elektrisches Potenzial
- 52: zweites elektrisches Potenzial
- 100: Metall-Schutzgas-Schweißgerät
- 110: Haupt-Drahtzuführeinrichtung
- 111: Schutzgasdüse
- 112: Handhabungseinheit / Schweißbrenner
- 113: Drahtendenführung der Haupt-Drahtzuführeinrichtung / Kontaktrohr
- 120: Zusatz-Drahtzuführeinrichtung
- 123: Drahtendenführung der Zusatz-Drahtzuführeinrichtung
- 130: Halterung
- 140: Steuereinrichtung
- 150: Stromquelle / Schweißstromquelle
- 157: Drahtelektrode-Kurzschluss-Erfassungseinrichtung
- 160: Benutzerschnittstelle
- 170: Zusatzdraht-Kurzschluss-Erfassungseinrichtung

- F1: erste Förderrichtung
- F2: zweite Förderrichtung
- FD: Fügerichtung
- GK: Gegenkraft
- IF: Fügestrom

- IF1, ...,IF3: Werte des Fügestroms
- K: Kraft
- KK: Kraftkomponente parallel zu Fügerichtung
- S10, ..., S190: Verfahrensschritte
- t: Zeit
- Tmin: Minimal-Zeitdauer
- Tmax: Maximal-Zeitdauer
- T1, ..., T7: Zeitpunkte
- UF: Fügespannung
- UF1, ..., UF3: Werte der Fügespannung
- UZ: Spannung zwischen Werkstück und Zusatzdraht
- vD: Vorschubgeschwindigkeit der Drahtelektrode
- vD1, vD2: Geschwindigkeitswerte der Drahtelektrode
- vZ: Vorschubgeschwindigkeit des Zusatzdrahts
- vZ1, ..., vZ4: Geschwindigkeitswerte des Zusatzdrahts

- α: Winkel zwischen der ersten Förderrichtung und der zweiten Förderrichtung

## Patentansprüche

1. Metall-Schutzgas-Lichtbogenfügegerät (100) für das Hand-Lichtbogenfügen (HLF), umfassend:
- eine Stromquelle (150);
- eine Handhabungseinheit (112);
- eine Haupt-Drahtzuführeinrichtung (110) zum Fördern einer lichtbogentragenden abschmelzenden Drahtelektrode (10); und
- eine mit der Handhabungseinheit (112) verbundene Zusatz-Drahtzuführeinrichtung (120) zum Fördern eines abschmelzenden Zusatzdrahts (20);
- eine Benutzerschnittstelle (160), welche dazu eingerichtet ist, als Reaktion auf eine Benutzereingabe zum Beenden des Hand-Lichtbogenfügens (HLF) ein End-Signal zu erzeugen;
- eine Steuereinrichtung (140), welche dazu eingerichtet ist, als Reaktion auf das End-Signal:
a) die Stromquelle (150) und die Haupt-Drahtzuführeinrichtung(110) zu steuern, einen bei Empfang des End-Signals an der lichtbogentragenden abschmelzenden Drahtelektrode (10) anliegenden Lichtbogen (4) nach Empfang des End-Signals noch für mindestens eine Minimal-Zeitdauer (Tmin) aufrechtzuerhalten, bevor sein Erlöschen bewirkt oder zugelassen wird, und
b) die Zusatz-Drahtzuführeinrichtung (120) zu steuern, dass der abschmelzende Zusatzdraht (20) zumindest während der Minimal-Zeitdauer (Tmin) zumindest zeitweise seine Vorschubgeschwindigkeit (vZ) ändert.

2. Metall-Schutzgas-Lichtbogenfügegerät (100) für das Hand-Lichtbogenfügen (HLF), wobei die Steuereinrichtung (140) ferner dazu eingerichtet ist, die Zusatz-Drahtzuführeinrichtung (120) zu steuern, dass eine Vorschubgeschwindigkeit (vZ) des abschmelzenden Zusatzdrahts (20) während der Minimal-Zeitdauer (Tmin) reduziert wird, auf null sinkt, und/oder negativ wird.

3. Metall-Schutzgas-Lichtbogenfügegerät (100) gemäß Anspruch 1 oder 2,
wobei die Minimal-Zeitdauer (Tmin) mindestens 10 Millisekunden, bevorzugt mindestens 50 Millisekunden beträgt.

4. Metall-Schutzgas-Lichtbogenfügegerät (100) gemäß einem der Ansprüche 1 bis 3,
wobei die Steuereinrichtung (140) dazu eingerichtet ist, das Aufrechterhalten (S130) des Lichtbogens (4) nach Empfang des End-Signals spätestens dann zu beenden, wenn der Lichtbogen (4) für eine Maximal-Zeitdauer (Tmax) aufrechterhalten wurde;
wobei die Maximal-Zeitdauer (Tmax) 500 Millisekunden oder weniger, bevorzugt 300 Millisekunden oder weniger, beträgt.

5. Metall-Schutzgas-Lichtbogenfügegerät (100) gemäß einem der Ansprüche 1 bis 4,
ferner umfassend eine Zusatzdraht-Kurzschluss-Erfassungseinrichtung (170), welche dazu eingerichtet ist, zu erfassen, ob ein Kurzschluss des abschmelzenden Zusatzdrahts (20) mit einem Werkstück (1, 2) vorliegt.

6. Metall-Schutzgas-Lichtbogenfügegerät (100) gemäß Anspruch 5,
wobei die Zusatzdraht-Kurzschluss-Erfassungseinrichtung (170) dazu eingerichtet ist, ein Eintreten eines Kurzschlusses anhand einer Spannungsänderung an dem abschmelzenden Zusatzdraht (20) und/oder anhand einer Änderung einer benötigten oder ausgeübten Drahtvorschubkraft zum Fördern des abschmelzenden Zusatzdrahts (20) durch die Zusatz-Drahtzuführeinrichtung (120) zu erfassen.

7. Metall-Schutzgas-Lichtbogenfügegerät (100) gemäß Anspruch 5 oder Anspruch 6,
wobei die Steuereinrichtung (140) dazu eingerichtet ist, das Aufrechterhalten (S130) des Lichtbogens (4) nach Empfang des End-Signals und nach Ablauf der Minimal-Zeitdauer (Tmin) spätestens dann zu beenden, wenn durch die Zusatzdraht-Kurzschluss-Erfassungseinrichtung (170) ein Aufbruch des Kurzschlusses des abschmelzenden Zusatzdrahts (20) mit dem Werkstück (1, 2), erfasst wird.

8. Metall-Schutzgas-Lichtbogenfügegerät (100) gemäß einem der Ansprüche 5 bis 7,
wobei die Steuereinrichtung (140) dazu eingerichtet ist, eine Drahtlänge des abschmelzenden Zusatzdrahts (20) zu erfassen, um welche der abschmelzende Zusatzdraht (20) rückwärts gefördert wurde, bis durch die Zusatzdraht-Kurzschluss-Erfassungseinrichtung (170) der Aufbruch des Kurzschlusses erfasst wurde; und
ferner dazu eingerichtet ist, den abschmelzenden Zusatzdraht (20), nachdem er rückwärts gefördert wurde, unter Berücksichtigung der erfassten Drahtlänge vorwärts auf eine eingestellte Stick-Out-Länge zu fördern, wobei das Vorwärtsfördern insbesondere mit einer Drahtvorschubgeschwindigkeit von mindestens 5 Metern pro Minute, bevorzugt von mindestens 8 Metern pro Minute, besonders bevorzugt von zwischen 8 Metern pro Minute und 15 Metern pro Minute, insbesondere von 10 Metern pro Minute, erfolgt.

9. Metall-Schutzgas-Lichtbogenfügegerät (100) gemäß einem der Ansprüche 5 bis 8,
wobei die Benutzerschnittstelle (160) außerdem dazu eingerichtet ist, als Reaktion auf eine Benutzereingabe zum Beginnen des Hand-Lichtbogenfügens (HLF) ein Start-Signal zu erzeugen; und
wobei die Steuereinrichtung (140) dazu eingerichtet ist, als Reaktion auf das Start-Signal die Zusatz-Drahtzuführeinrichtung (120) zu steuern, den abschmelzenden Zusatzdraht (20) vorwärts zu fördern, bis die Zusatzdraht-Kurzschluss-Erfassungseinrichtung (170) einen Kurzschluss zwischen dem abschmelzenden Zusatzdraht (20) und dem Werkstück (1, 2) erfasst;
wobei die Steuereinrichtung (140) außerdem dazu eingerichtet ist, die Stromquelle (150) und die Haupt-Drahtzuführeinrichtung (110) frühestens dann zu steuern, den Lichtbogen (4) für das Hand-Lichtbogenfügen (HLF) an der lichtbogentragenden abschmelzenden Drahtelektrode (10) zu erzeugen, wenn der Kurzschluss zwischen dem abschmelzenden Zusatzdraht (20) und dem Werkstück (1, 2) erfasst wurde; und
wobei die Steuereinrichtung (140) außerdem dazu eingerichtet ist, die Zusatz-Drahtzuführeinrichtung (120) zu steuern, den abschmelzenden Zusatzdraht (20) bis zum Erfassen des Kurzschlusses mit einer höheren Vorschubgeschwindigkeit (vZ1) vorwärts zu fördern als bei dem nachfolgenden Hand-Lichtbogenfügen (HLF) während des Brennens des Lichtbogens (4).

10. Metall-Schutzgas-Lichtbogenfügegerät (100) gemäß Anspruch 9, wobei das Vorwärts-Fördern, welches als Reaktion auf das Start-Signal erfolgt, mit einer Vorschubgeschwindigkeit (vZ1) zwischen 1,5 Metern pro Minute und 6 Metern pro Minute erfolgt.

11. Metall-Schutzgas-Lichtbogenfügegerät (100) gemäß einem der Ansprüche 1 bis 10,
wobei die Steuereinrichtung (140) dazu eingerichtet ist, die Stromquelle (150) zu steuern, den elektrischen Strom (IF) des Lichtbogens (4) mit Empfang des End-Signals zu senken oder zu erhöhen, insbesondere um 50 %, und/oder die Stromzeitfläche für 100 Millisekunden oder mehr zu verlängern oder zu verringern.

12. Metall-Schutzgas-Lichtbogenfügegerät (100) gemäß einem der Ansprüche 1 bis 11,
wobei eine Drahtendenführung (123) der Zusatz-Drahtzuführeinrichtung (120) derart angeordnet und eingerichtet ist, dass der abschmelzende Zusatzdraht (20), bei dem Hand-Lichtbogenfügen (HLF) an einem zu fügenden Werkstück (1, 2) derart auftrifft, dass er, während er angeschmolzen wird, auf das Werkstück (1, 2) eine Kraft (K) ausübt und somit eine Gegenkraft (GK) auf die Handhabungseinheit (112) erzeugt.

13. Metall-Schutzgas-Lichtbogenfügegerät (100) gemäß Anspruch 12, wobei das Fördern des abschmelzenden Zusatzdrahts (20) bei dem Hand-Lichtbogenfügen (HLF) mit einer Geschwindigkeit zwischen 0,1 Meter pro Minute und 3 Metern pro Minute, bevorzugt zwischen 0,3 Metern pro Minute und 1,5 Metern pro Minute erfolgt.

14. Verfahren zum Beenden eines Hand-Lichtbogenfügens, umfassend:
- Hand-Lichtbogenfügen (S110, HLF) eines Werkstücks (1, 2) mittels eines Lichtbogens (4), welcher an einer lichtbogentragenden abschmelzenden Drahtelektrode (10) anliegt, wobei ein abschmelzender Zusatzdraht (20) zugeführt wird;
- automatisches Erfassen (S120) einer Benutzereingabe zum Beenden des Hand-Lichtbogenfügens (HLF), und daraufhin:
- automatisches Aufrechterhalten (S130) des bei Erfassen (S120) der Benutzereingabe an der lichtbogentragenden abschmelzenden Drahtelektrode (10) anliegenden Lichtbogens (4) nach Erfassen der Benutzereingabe noch für mindestens eine Minimal-Zeitdauer (Tmin); und
- zumindest zeitweises automatisches Ändern (S140) der Vorschubgeschwindigkeit (vZ) des abschmelzenden Zusatzdrahts (20) während der Minimal-Zeitdauer (Tmin).

15. Verfahren zum Beginnen eines Hand-Lichtbogenfügens (HLF) eines Werkstücks, umfassend:
- automatisches Erfassen (S10) einer Benutzereingabe zum Beginnen des Hand-Lichtbogenfügens (HLF), und daraufhin:
- automatisches Fördern (S20) eines abschmelzenden Zusatzdrahts (20) vorwärts, bis ein Kurzschluss zwischen dem abschmelzenden Zusatzdraht (20) und dem Werkstück (1, 2) erfasst (S30) wird;
- automatisches Erzeugen (S40) eines Lichtbogens (4) zum Hand-Lichtbogenfügen (HLF) an einer lichtbogentragenden abschmelzenden Drahtelektrode (10) frühestens dann, wenn der Kurzschluss zwischen dem abschmelzenden Zusatzdraht (20) und dem Werkstück (1, 2) erfasst wurde; und
- Hand-Lichtbogenfügen (S110, HLF) des Werkstücks (1, 2), mittels des erzeugten Lichtbogens (4), wobei der abschmelzende Zusatzdraht (20) bis zum Erfassen (S30) des Kurzschlusses mit einer höheren Vorschubgeschwindigkeit (vZ1) vorwärts gefördert wird als bei dem nachfolgenden Hand-Lichtbogenfügen (HLF) während des Brennens des Lichtbogens (4).

16. Verfahren nach Anspruch 14 oder 15, wobei das Hand-Lichtbogenfügen (S110, HLF) ein händisches Führen einer Handhabungseinheit (112) in einer Fügerichtung (FD) entlang einer zu erzeugenden Fügenaht an dem Werkstück (1, 2) umfasst, wobei der abschmelzende Zusatzdraht (20), derart an das Werkstück (1, 2) herangeführt wird, dass eine Kraftkomponente (KK) einer von dem abschmelzenden Zusatzdraht (20) auf das Werkstück (1, 2) ausgeübten Kraft (K) eine Gegenkraft (GK) auf die Handhabungseinheit (112) in die Fügerichtung (FD) bewirkt.
